# EUROPEAN PATENT APPLICATION

(11) **EP 4 716 068 A1**
(43) Date of publication of application: **25.03.2026**
(21) Application number: 24818339.4
(22) Date of filing: 22.03.2024
(51) Int. Cl.: H02K 1/20

(54) **STATOR SILICON STEEL SHEET WITH RADIAL FLOW CHANNEL, STATOR CORE, MOTOR AND ELECTRIC VEHICLE**

(30) Priority: 09.06.2023 CN 202310686031
(71) Applicant: Huawei Digital Power Technologies Co., Ltd., Shenzhen, Guangdong 518043 (CN)
(72) Inventor: HUANGFU, Yuzhao, Shenzhen, Guangdong 518043 (CN); ZHANG, Bowen, Shenzhen, Guangdong 518043 (CN); JIANG, Zhiwei, Shenzhen, Guangdong 518043 (CN); ZHANG, Nan, Shenzhen, Guangdong 518043 (CN)
(74) Representative: Maiwald GmbH
(86) International application number: PCT/CN2024/083394
(87) International publication number: WO 2024/250802

(57) **Abstract**

This application relates to the field of motor technologies, and in particular, to a stator silicon steel sheet with a radial flow channel, a stator core, a motor, a powertrain, and an electric vehicle. The stator silicon steel sheet with the radial flow channel includes a plurality of first cooling holes, a plurality of second cooling holes, and at least one radial flow channel. In an axial direction of the stator silicon steel sheet, each first cooling hole and each second cooling hole penetrate the stator silicon steel sheet. In a circumferential direction of the stator silicon steel sheet, the plurality of first cooling holes are spaced from each other, and the plurality of second cooling holes are spaced from each other. In a radial direction of the stator silicon steel sheet, a distance between each first cooling hole and a center of the stator silicon steel sheet is greater than a distance between each second cooling hole and the center of the stator silicon steel sheet, and the second cooling hole is closer to the center of the stator silicon steel sheet than the first cooling hole. Each radial flow channel is configured to communicate with one first cooling hole and one second cooling hole, and the first cooling hole and the second cooling hole are adjacently arranged in the radial direction of the stator silicon steel sheet. The radial flow channel can enhance heat dissipation performance of the motor.

## Description

### CROSS-REFERENCE TO RELATED APPLICATIONS

This application claims priority to Chinese Patent Application No. 202310686031.6, filed with the China National Intellectual Property Administration on June 9, 2023 and entitled "STATOR SILICON STEEL SHEET WITH RADIAL FLOW CHANNEL, STATOR CORE, MOTOR, AND ELECTRIC VEHICLE", which is incorporated herein by reference in its entirety.

### TECHNICAL FIELD

This application relates to the field of motor technologies, and in particular, to a stator silicon steel sheet with a radial flow channel, a stator core, a motor, a powertrain, and an electric vehicle.

### BACKGROUND

With development of science and technology, power density of a motor is increasingly high, and a volume of the motor is increasingly small. Higher power density of the motor imposes a higher requirement on heat dissipation of the motor.

When the motor operates, a heat loss of a stator core is an important heat source of the motor, and oil-cooled heat dissipation may be performed on a stator through a heat dissipation channel disposed on the stator of the motor. Currently, a heat dissipation manner of the motor stator in the conventional technology is inefficient, and cooling effect needs to be improved.

### SUMMARY

This application provides a stator silicon steel sheet with a radial flow channel, a stator core, a motor, a powertrain, and an electric vehicle. An inner-layer cooling channel of the stator core can communicate with an outer-layer cooling channel of the stator core through the stator silicon steel sheet, enhancing cooling performance of the motor.

According to a first aspect, this application provides a stator silicon steel sheet with a radial flow channel. The stator silicon steel sheets may be stacked to form a stator core or a part of the stator core. The stator silicon steel sheet includes a plurality of first cooling holes, a plurality of second cooling holes, and at least one radial flow channel. In an axial direction of the stator silicon steel sheet, each first cooling hole and each second cooling hole penetrate the stator silicon steel sheet. In a circumferential direction of the stator silicon steel sheet, the plurality of first cooling holes are spaced from each other, and the plurality of second cooling holes are spaced from each other. In a radial direction of the stator silicon steel sheet, a distance between each first cooling hole and a center of the stator silicon steel sheet is greater than a distance between each second cooling hole and the center of the stator silicon steel sheet, and the second cooling hole is closer to the center of the stator silicon steel sheet than the first cooling hole. Each radial flow channel is configured to communicate with one first cooling hole and one second cooling hole, and the first cooling hole and the second cooling hole are adjacently arranged in the radial direction of the stator silicon steel sheet.

The stator silicon steel sheet with the radial flow channel provided in this application is used in the stator core of a motor. Coolant may be fed into the first cooling hole, and the coolant may also be fed into the second cooling hole, to form two cooling channels in a radial direction of the stator core. The first cooling hole may communicate with the second cooling hole through the radial flow channel, so that the coolant can flow between the first cooling hole and the second cooling hole. In this way, the two cooling channels communicate with each other, improving cooling efficiency, and enhancing heat dissipation performance of the motor.

In a possible implementation, the stator silicon steel sheet includes a central hole and a plurality of grooves, and the central hole and each groove separately penetrates the stator silicon steel sheet in the axial direction of the stator silicon steel sheet. In the circumferential direction of the stator silicon steel sheet, the plurality of grooves are spaced from each other and separately communicate with the central hole. When the plurality of stator silicon steel sheets are stacked in the axial direction of the stator silicon steel sheet, central holes of the plurality of stator silicon steel sheets can communicate with each other to form space for accommodating a rotor, the plurality of grooves can communicate with each other to form a tooth part of the stator core, and the groove is used for winding of a stator winding. In the radial direction of the stator silicon steel sheet, the plurality of first cooling holes are respectively arranged adjacent to the plurality of second cooling holes, that is, the second cooling hole is located between the first cooling hole and the central hole. A groove bottom of the groove faces away from a center of the stator silicon steel sheet, and a distance between the groove bottom of the groove and the center of the stator silicon steel sheet is less than a distance between each second cooling hole and the center of the stator silicon steel sheet. In this way, the second cooling hole is closer to the center of the stator silicon steel sheet than the groove bottom of the groove, and coolant in the second cooling hole is closer to the stator winding in the groove, further improving dissipation efficiency.

In a possible implementation, a quantity of the grooves is the same as a quantity of the second cooling holes, and each second cooling hole is arranged between two adjacent grooves. In other words, one second cooling hole is disposed between any two circumferentially adjacent grooves, and there is a small heat transfer distance between the second cooling hole and stator windings in the two grooves, improving heat conduction efficiency, and enhancing heat dissipation effect. A width of each second cooling hole is less than a width of each groove, to ensure stiffness of the stator silicon steel sheet.

In a possible implementation, in the axial direction of the stator silicon steel sheet, each radial flow channel penetrates the stator silicon steel sheet and communicates with one first cooling hole and one second cooling hole. When the plurality of stator silicon steel sheets are stacked in the axial direction of the stator silicon steel sheet, radial flow channels of two adjacent stator silicon steel sheets can communicate with each other, to improve a flow rate of the coolant. Certainly, the radial flow channel may alternatively be an inner channel through which the first cooling hole communicates with the second cooling hole.

In a possible implementation, a size of the stator silicon steel sheet in the radial direction changes, and a width of the first cooling hole is greater than a width of the second cooling hole in the circumferential direction of the stator silicon steel sheet. Based on the circumferential widths of the first cooling hole and the second cooling hole, a width of a part that is of the radial flow channel and that is close to the second cooling hole is less than a width of a part that is of the radial flow channel and that is close to the second cooling hole.

In a possible implementation, the quantity of the plurality of second cooling holes is the same as a quantity of the plurality of first cooling holes, and one of any two adjacent second cooling holes communicates with one of any two adjacent second cooling holes through one radial flow channel. In the circumferential direction of the stator silicon steel sheet, one of any two adjacent first cooling holes communicates with a corresponding second cooling hole through a radial flow channel. Specifically, the first cooling hole that communicates with the second cooling hole through the radial flow channel and the first cooling hole that does not communicate with the second cooling hole may be alternately distributed in the circumferential direction of the stator silicon steel sheet.

In a possible implementation, an outer circumferential surface of the stator silicon steel sheet includes a plurality of notches, and each notch penetrates the stator silicon steel sheet in the axial direction of the stator silicon steel sheet. In the radial direction of the stator silicon steel sheet, each notch communicates with one first cooling hole, so that the first cooling hole can communicate with the outer circumferential surface of the stator silicon steel sheet. When coolant is fed into the first cooling hole, it may be considered that the coolant can flow along the outer circumferential surface of the stator silicon steel sheet, to perform liquid cooling heat dissipation on the outer circumferential surface of the stator silicon steel sheet.

According to a second aspect, this application provides a stator core. The stator core includes at least one first silicon steel sheet and at least one stator silicon steel sheet provided in any one of the first aspect and the implementations of the first aspect. The first silicon steel sheet includes a central hole, a plurality of grooves, a plurality of first cooling holes, and a plurality of second cooling holes. In an axial direction of the first silicon steel sheet, the central hole and each groove separately penetrate the first silicon steel sheet. In a circumferential direction of the first silicon steel sheet, the plurality of grooves are spaced from each other and separately communicate with the central hole. In an axial direction of the stator core, one of the at least one first silicon steel sheet and one of the at least one stator silicon steel sheet are adjacently arranged. A central hole of one first silicon steel sheet communicates with a central hole of one stator silicon steel sheet to form space for accommodating a rotor, and a plurality of grooves of one first silicon steel sheet respectively communicate with a plurality of grooves of one stator silicon steel sheet for winding of a stator winding. A plurality of first cooling holes of one first silicon steel sheet respectively communicate with a plurality of first cooling holes of one stator silicon steel sheet to form an outer-layer cooling channel of the stator core, and a plurality of second cooling holes of one first silicon steel sheet respectively communicate with a plurality of second cooling holes of one stator silicon steel sheet to form an inner-layer cooling channel.

The stator core, the at least one first silicon steel sheet, and the at least one stator silicon steel sheet can be adjacently arranged in the axial direction of the stator core, and coolant may be fed into the outer-layer cooling channel and the inner-layer cooling channel that are formed by the stator core to perform double-layer cooling and heat dissipation on the stator core, enhancing heat dissipation performance of the stator core. The outer-layer cooling channel can communicate with the inner-layer cooling channel through a radial flow channel on the stator silicon steel sheet, and the coolant can flow in the cooling channels on both sides by introducing the coolant into the outer-layer cooling channel or the inner-layer cooling channel.

In a possible implementation, the first silicon steel sheet includes a plurality of protrusions, and in a radial direction of the stator core, each protrusion in one first silicon steel sheet is fastened to a hole wall of one first cooling hole and extends in a direction away from the central hole. In a circumferential direction of the stator core, a width of each protrusion is less than a width of each first cooling hole, and the protrusion can divide the first cooling hole in the circumferential direction of the first silicon steel sheet, to change a circulation cross-sectional area of the first cooling hole, so as to change a circulation rate of the coolant. The width of each protrusion is less than the width of each first cooling hole of the stator silicon steel sheet, so that the coolant in the first cooling hole of the stator silicon steel sheet can flow into the first cooling hole of the first silicon steel sheet.

In a possible implementation, in the axial direction of the stator core, another stator silicon steel sheet of the at least one stator silicon steel sheet is arranged on the other side of the stator silicon steel sheet. When the at least one stator silicon steel sheet includes two or more stator silicon steel sheets and is arranged on one side of the axial direction of the first silicon steel sheet, the stator silicon steel sheets are adjacently arranged. In the axial direction of the stator core, one radial flow channel of one stator silicon steel sheet communicates with one radial flow channel of another stator silicon steel sheet, and the outer-layer cooling channel and the inner-layer cooling channel of the stator core communicate with each other on one side of the at least one first silicon steel sheet.

In a possible implementation, the stator core includes a plurality of second silicon steel sheets, and the second silicon steel sheets include a central hole, a plurality of grooves, a plurality of first cooling holes, and a plurality of second cooling holes in the axial direction of the stator core. In an axial direction of the second silicon steel sheet, the central hole and each groove separately penetrate the second silicon steel sheet. In a circumferential direction of the second silicon steel sheet, the plurality of grooves are spaced from each other and separately communicate with the central hole. In the axial direction of the stator core, one of the plurality of second silicon steel sheets and another second silicon steel sheet are adjacently arranged, and the one second silicon steel sheet is arranged between the another second silicon steel sheet and one stator silicon steel sheet, or the one second silicon steel sheet is arranged between the another second silicon steel sheet and one first silicon steel sheet. The second silicon steel sheet is arranged at an axial end of the stator core, the coolant in the cooling channel of the stator core may be discharged from the first cooling hole and the second cooling hole of the second silicon steel sheet, and the second silicon steel sheet may perform a liquid spraying function. A hole diameter of a first cooling hole of the one second silicon steel sheet is less than a hole diameter of the first cooling hole of the stator silicon steel sheet or a hole diameter of the first cooling hole of the first silicon steel sheet. When the coolant flows from the first cooling hole of the stator silicon steel sheet to the first cooling hole of the second silicon steel sheet, or the coolant flows from the first cooling hole of the first silicon steel sheet to the first cooling hole of the second silicon steel sheet, because the hole diameter of the first cooling hole decreases, flow pressure of the coolant increases. This increases a rate at which the coolant is sprayed from the first cooling hole of the second silicon steel sheet, and optimizes spraying effect.

In a possible implementation, in the axial direction of the stator core, one first cooling hole of one second silicon steel sheet communicates with one first cooling hole of another second silicon steel sheet. Two axially adjacent second silicon steel sheets may rotate in the circumferential direction by a specified angle relative to a center of the stator core, and the specified angle is an included angle between two adjacent first cooling holes of a same second silicon steel sheet. In the radial direction of the stator core, a distance between one first cooling hole of one second silicon steel sheet and the central hole is greater than a distance between one first cooling hole of the another second silicon steel sheet and the central hole. In this case, a center of a cooling channel through which the two first cooling holes communicate with each other deviates in the radial direction of the stator core. In the circumferential direction of the stator core, distances between the central hole and the plurality of first cooling holes of the at least one of the one second silicon steel sheet or the another second silicon steel sheet decrease. The distances between the central hole and the plurality of first cooling holes of the second silicon steel sheet change. After the plurality of second silicon steel sheets are sequentially deflected and stacked, the formed outer-layer cooling channel is inclined in the radial direction of the stator core. In this way, a flow direction of the coolant is changed.

In a possible implementation, a quantity of the plurality of first cooling holes of the second silicon steel sheet is less than a quantity of the plurality of first cooling holes of the stator silicon steel sheet or the first silicon steel sheet. In the axial direction of the stator core, each first cooling hole of one second silicon steel sheet communicates with one first cooling hole of the stator silicon steel sheet or one first cooling hole of the first silicon steel sheet. When the second silicon steel sheet is arranged adjacent to the first silicon steel sheet or the stator silicon steel sheet, a part of the first cooling holes of the first silicon steel sheet and a part of the first cooling holes of the stator silicon steel sheet are blocked by the second silicon steel sheet. Therefore, the outer-layer cooling channel herein is blocked in the axial direction of the stator core, and the coolant cannot be sprayed out of the first cooling hole of the second silicon steel sheet.

In a possible implementation, in the circumferential direction of the stator core, at least one of any two adjacent first cooling holes in the stator silicon steel sheet or the first silicon steel sheet communicates with one first cooling hole in one second silicon steel sheet. For any two adjacent first cooling holes in the stator silicon steel sheet or the first silicon steel sheet, coolant in only one of the first cooling holes can be sprayed out through the first cooling hole in the second silicon steel sheet. An arrangement manner and an angle of the stator silicon steel sheet, the first silicon steel sheet, and the second silicon steel sheet are adjusted, so that the flow path of the coolant can be adjusted to meet a cooling requirement.

According to a third aspect, this application provides a motor. The motor includes a rotor and a stator core, and the stator core includes a plurality of first silicon steel sheets and at least one stator silicon steel sheet provided in any one of the first aspect and the implementations of the first aspect. In an axial direction of the motor, the plurality of first silicon steel sheets are adjacently arranged to the at least one stator silicon steel sheet, and the plurality of first silicon steel sheets communicates with a central hole of the at least one stator silicon steel sheet to accommodate the rotor.

Alternatively, the motor includes a housing and the stator core provided in any one of the second aspect and the implementations of the second aspect. The housing is sleeved on an outer circumferential surface of the stator core, the housing includes a coolant interface, and the coolant interface communicates with a first cooling hole of the first silicon steel sheet of the stator core or a first cooling hole of the stator silicon steel sheet of the stator core. When coolant is fed into the motor, the coolant may be fed into an outer-layer cooling channel of the stator core through the coolant interface. The coolant in the outer-layer cooling channel may flow into an inner-layer cooling channel through a radial flow channel of the stator silicon steel sheet, enhancing heat dissipation performance of the motor.

According to a fourth aspect, this application further provides a powertrain. The powertrain includes the motor according to any one of the third aspect and the implementations of the third aspect. The powertrain includes a reducer or a transmission, and the motor according to any one of the third aspect and the implementations of the third aspect. A motor shaft of the motor is in transmission connection to an input shaft of the reducer or an input shaft of the transmission. Because the motor has good heat dissipation performance, heat dissipation performance and power performance of the powertrain can be enhanced.

According to a fifth aspect, this application further provides an electric vehicle. The electric vehicle in this application includes wheels, a transmission mechanism, and the powertrain according to any one of the fourth aspect and the implementations of the fourth aspect. The powertrain drives the wheels via the transmission mechanism. The electric vehicle provided in this application has good heat dissipation performance and power performance.

### BRIEF DESCRIPTION OF DRAWINGS

FIG. 1 is a diagram of a structure of an electric vehicle according to an embodiment of this application;
FIG. 2a is a diagram of a structure of a powertrain according to an embodiment of this application;
FIG. 2b is a diagram of a structure of a motor according to an embodiment of this application;
FIG. 3 is a diagram of a structure of a stator core according to an embodiment of this application;
FIG. 4a is a diagram of a structure of a stator silicon steel sheet according to an embodiment of this application;
FIG. 4b is a diagram of a structure of a stator silicon steel sheet according to an embodiment of this application;
FIG. 4c is a diagram of a partial structure of a stator silicon steel sheet according to an embodiment of this application;
FIG. 5 is a diagram of a structure of a stator silicon steel sheet according to an embodiment of this application;
FIG. 6 is a diagram of a structure of a plurality of stator silicon steel sheets that are adjacently arranged according to an embodiment of this application;
FIG. 7a is a diagram of a structure of a first silicon steel sheet according to an embodiment of this application;
FIG. 7b is a diagram of a structure of a first silicon steel sheet according to an embodiment of this application;
FIG. 7c is a diagram of a structure of a first silicon steel sheet according to an embodiment of this application;
FIG. 7d is a diagram of a structure of a first silicon steel sheet according to an embodiment of this application;
FIG. 7e is a diagram of a partial structure of a first silicon steel sheet according to an embodiment of this application;
FIG. 8 is a diagram of a structure of a first silicon steel sheet according to an embodiment of this application;
FIG. 9 is a diagram of a structure of a plurality of first silicon steel sheets that are adjacently arranged according to an embodiment of this application;
FIG. 10a is a diagram of a structure of a stator silicon steel sheet and a first silicon steel sheet that are adjacently arranged according to an embodiment of this application;
FIG. 10b is an enlarged view of a position A in FIG. 10a;
FIG. 11a is a diagram of a structure of a stator core according to an embodiment of this application;
FIG. 11b is a diagram of a structure of two stator silicon steel sheets in FIG. 11a;
FIG. 11c is a diagram of a cross-sectional structure of the stator core in FIG. 11a;
FIG. 11d is a diagram of a partial structure in FIG. 11c;
FIG. 12a is a diagram of a structure of a second silicon steel sheet according to an embodiment of this application;
FIG. 12b is a diagram of a structure of a second silicon steel sheet according to an embodiment of this application;
FIG. 13 is a diagram of a cross-sectional structure of a plurality of second silicon steel sheets that are adjacently arranged according to an embodiment of this application;
FIG. 14a is a diagram of a structure of a plurality of second silicon steel sheets that are adjacently arranged according to an embodiment of this application;
FIG. 14b is an enlarged view of a position M in FIG. 14a;
FIG. 14c is a diagram of a cross-sectional structure of a position N1 in FIG. 14b;
FIG. 14d is a diagram of a cross-sectional structure of a position N2 in FIG. 14b;
FIG. 14e is a diagram of a cross-sectional structure of a plurality of second silicon steel sheets that are adjacently arranged according to an embodiment of this application;
FIG. 15a is a diagram of a structure of a stator silicon steel sheet and a second silicon steel sheet that are adjacently arranged according to an embodiment of this application;
FIG. 15b is an enlarged view of a position V in FIG. 15a;
FIG. 16a is a diagram of a structure of a stator core according to an embodiment of this application;
FIG. 16b is an exploded view of a stator core according to an embodiment of this application;
FIG. 17a is a diagram of a cross-sectional structure of the stator core in FIG. 16a;
FIG. 17b is a diagram of a partial structure in FIG. 17a;
FIG. 17c is a diagram of a flow path of coolant in a stator core according to an embodiment of this application;
FIG. 18a is a diagram of a cross-sectional structure of the stator core in FIG. 16a at another position;
FIG. 18b is a diagram of a partial structure in FIG. 18a;
FIG. 18c is a diagram of a flow path of coolant in a stator core according to an embodiment of this application;
FIG. 19 is a diagram of a flow path of coolant in a stator core according to an embodiment of this application;
FIG. 20 is a diagram of a structure of a stator core according to an embodiment of this application;
FIG. 21 is a diagram of a partial structure of a motor according to an embodiment of this application;
FIG. 22 is a diagram of a structure of a housing of a motor according to an embodiment of this application;
FIG. 23 is a diagram of a cross-sectional structure of a motor according to an embodiment of this application; and
FIG. 24 is a diagram of flow of coolant in a motor according to an embodiment of this application.

### DESCRIPTION OF EMBODIMENTS

In the conventional technology, oil-cooled heat dissipation is usually used for a stator of a motor. Specifically, oil may be passed through on the back of a stator core, and oil is sprayed onto a winding end of a stator winding, to dissipate heat for the stator. This heat dissipation manner has poor heat dissipation effect, and cannot meet a high heat dissipation requirement due to an increase in power density of the motor.

In view of this, an embodiment of this application provides a stator silicon steel sheet with a radial flow channel, a stator core, a motor, a powertrain, and an electric vehicle. The stator silicon steel sheet may form an inner-layer cooling channel and an outer-layer cooling channel, and the two cooling channels may communicate with each other through the radial flow channel, improving heat dissipation effect, and enhancing power performance and increasing service lives of the motor and the powertrain.

To make objectives, technical solutions, and advantages of this application clearer, the following further describes this application in detail with reference to accompanying drawings.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but are not limited to", unless otherwise specifically emphasized in another manner.

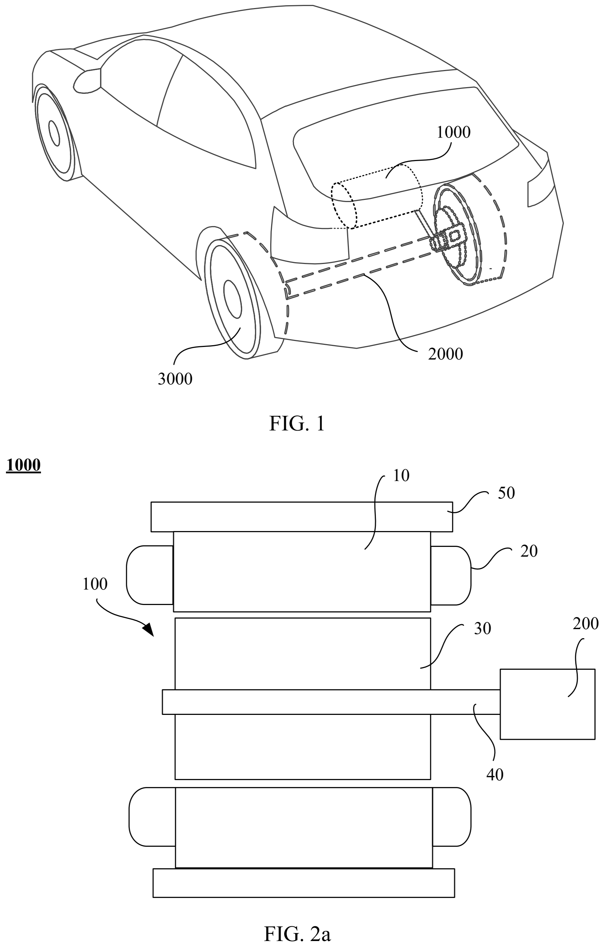

FIG. 1 is a diagram of an electric vehicle according to an embodiment of this application. Refer to FIG. 1. The electric vehicle provided in this embodiment of this application includes a powertrain 1000, a transmission mechanism 2000, and wheels 3000. The powertrain 1000 drives the wheel 3000 via the transmission mechanism 2000. The powertrain 1000 is configured to convert electric energy into mechanical energy. The transmission mechanism 2000 is configured to be in transmission connection to the powertrain 1000 and the wheel 3000.

FIG. 2a is a diagram of the powertrain according to an embodiment of this application. As shown in FIG. 2a, the powertrain 1000 provided in this embodiment of this application includes a motor 100 and a reducer 200. The motor 100 is in transmission connection to the reducer 200. The motor 100 is configured to drive the transmission mechanism 2000 of the electric vehicle via the reducer 200. The motor 100 includes a stator core 10, a stator winding 20, a rotor 30, a motor shaft 40, and a housing 50. The rotor 30 is coaxially fastened to the motor shaft 40, and the motor shaft 40 is in transmission connection to the reducer 200. The stator core 10 is sleeved outside the rotor 30, the stator winding 20 is wound around the stator core 10, and the housing 50 is disposed outside the stator core 10. The reducer 200 may alternatively be a transmission.

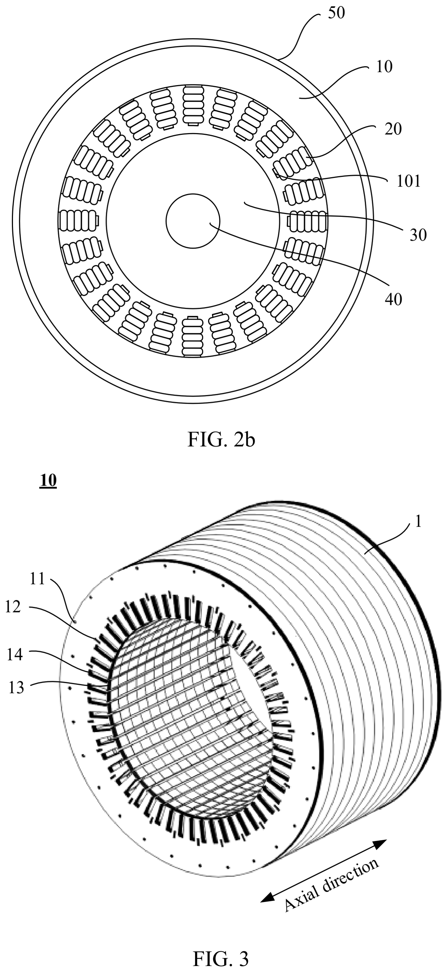

With reference to FIG. 2a, FIG. 2b is a diagram of structures of the stator core 10, the stator winding 20, and the rotor 30. As shown in FIG. 2b, the stator core 10 is annular, and a plurality of tooth parts 101 are disposed on an inner side of the stator core 10. In a circumferential direction of the stator core 10, a stator slot is formed between any two adjacent tooth parts 101, and the stator winding 20 may be wound in the stator slot. Refer to both FIG. 2a and FIG. 2b. The stator winding 20 has a part located in the stator slot and a part located outside the stator slot. The part that is of the stator winding 20 and that is located outside the stator slot protrudes from a side surface of the stator core 10 in an axial direction. The stator winding 20 is energized, so that a magnetic field can be generated at a center of the stator core 10, and the rotor 30 can rotate around an axis of the motor shaft 40 in the magnetic field.

FIG. 3 is a diagram of a structure of the stator core 10 according to an embodiment of this application. The stator core 10 includes a plurality of silicon steel sheets 1, and the plurality of silicon steel sheets 1 are adjacently arranged in the axial direction of the stator core 10. For example, each silicon steel sheet 1 includes a first cooling hole 11, a second cooling hole 12, a central hole 13, and a groove 14. There are a plurality of first cooling holes 11, a plurality of second cooling holes 12, and a plurality of grooves 14. The central hole 13 is located at a central position of the silicon steel sheet 1, each groove 14 extends in a radial direction of the silicon steel sheet 1 and communicates with the central hole 13 to form a stator groove, and a groove bottom of the groove 14 faces away from a center of the silicon steel sheet 1. In a circumferential direction of the silicon steel sheet 1, the plurality of first cooling holes 11 are spaced from each other, the plurality of second cooling holes 12 are spaced from each other, and the plurality of grooves 14 are spaced from each other. In the radial direction of the silicon steel sheet 1, a distance between each second cooling hole 12 and the central hole 13 is less than a distance between each first cooling hole 11 and the central hole 13. In the axial direction of the stator core 10, each first cooling hole 11, each second cooling hole 12, the central hole 13, and each groove 14 separately penetrate the silicon steel sheet 1.

After the plurality of silicon steel sheets 1 are arranged adjacently in the circumferential direction of the stator core 10, the central holes 13 of the plurality of silicon steel sheets 1 can communicate with each other to form space for accommodating the rotor 30. The plurality of grooves 14 of the plurality of silicon steel sheets 1 can communicate with each other, and a structure between any two grooves 14 can be superimposed in the axial direction of the stator core 10 to form the tooth part 101 of the stator core 10. The plurality of first cooling holes 11 of the plurality of silicon steel sheets 1 can communicate with each other to form an outer-layer cooling channel, and the plurality of second cooling holes 12 can communicate with each other to form an inner-layer cooling channel, so that the inner-layer cooling channel and the outer-layer cooling channel are formed in the stator core 10. Coolant may be fed into the inner-layer cooling channel and the outer-layer cooling channel, to perform liquid cooling heat dissipation on the stator core 10 and the stator winding 20 wound around the stator core 10, improving heat dissipation effect and enhancing heat dissipation performance of the stator core 10.

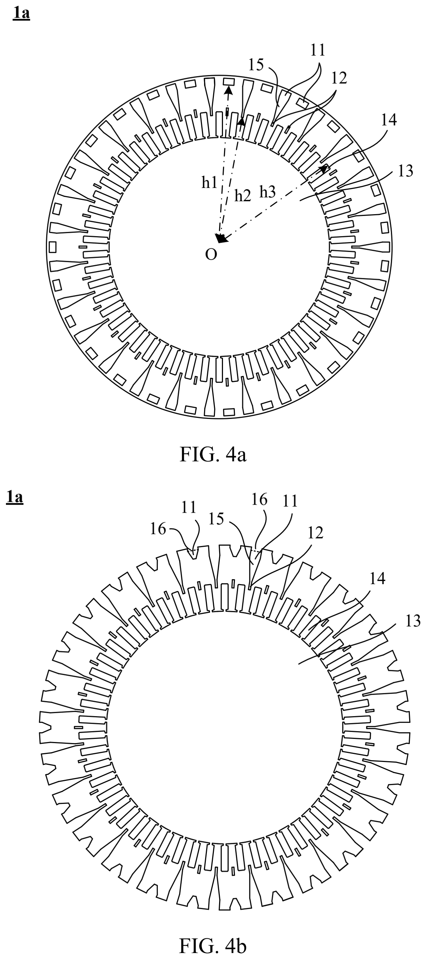

The plurality of silicon steel sheets 1 in the stator core 10 in this embodiment of this application include a stator silicon steel sheet 1a with a radial flow channel. For a structure of the stator silicon steel sheet 1a, refer to FIG. 4a. The stator silicon steel sheet 1a includes a central hole 13, a plurality of grooves 14, a plurality of first cooling holes 11, and a plurality of second cooling holes 12. In an axial direction of the stator silicon steel sheet 1a, each first cooling hole 11, each second cooling hole 12, each groove 14, and the central hole 13 penetrate the stator silicon steel sheet 1a. In a circumferential direction of the stator silicon steel sheet 1a, the plurality of first cooling holes 11 are spaced from each other, and the plurality of second cooling holes 12 are spaced from each other. In a radial direction of the stator silicon steel sheet 1a, a distance h1 between each first cooling hole 11 and a center O of the stator silicon steel sheet 1a is greater than a distance h2 between each second cooling hole 12 and the center O of the stator silicon steel sheet 1a. The stator silicon steel sheet 1a further includes the radial flow channel 15, there is at least one radial flow channel 15, and each radial flow channel 15 is configured to communicate with one first cooling hole 11 and one second cooling hole 12. The first cooling hole 11 and the second cooling hole 12 are adjacently arranged in the radial direction of the stator silicon steel sheet 1a. In the circumferential direction of the stator silicon steel sheet 1a, the plurality of grooves are spaced from each other and separately communicate with the central hole 13, and a groove bottom of each groove 14 faces away from the center O of the stator silicon steel sheet 1a. A distance h3 between the groove bottom of the groove 14 and the center O of the stator silicon steel sheet 1a is less than the distance h2 between each second cooling hole 12 and the center O of the stator silicon steel sheet 1a. It may be considered that the second cooling hole 12 is closer to the center O of the stator silicon steel sheet 1a than the groove 14.

For example, as shown in FIG. 4a, in the stator silicon steel sheet 1a in this embodiment of this application, a quantity of the first cooling holes 11 is the same as a quantity of the second cooling holes 12. In the radial direction of the stator silicon steel sheet 1a, each first cooling hole 11 corresponds to one second cooling hole 12, and the first cooling hole 11 and the second cooling hole 12 are adjacently arranged. A quantity of the grooves 14 is the same as the quantity of the second cooling holes 12. In the circumferential direction of the stator silicon steel sheet 1a, each second cooling hole 12 is arranged between two adjacent grooves 14, so that the second cooling holes 12 are distributed more evenly, and coolant in the second cooling hole 12 can evenly dissipate heat for the stator winding 20 wound in the groove 14. In addition, the second cooling hole 12 disposed between the two adjacent grooves 14 may be closer to the center O of the stator silicon steel sheet 1a, so that the coolant in the second cooling hole 12 is closer to the stator winding 20 wound in the groove 14. A heat transfer path is shorter, improving heat dissipation efficiency.

One of any two adjacent first cooling holes 11 communicates with one of any two adjacent second cooling holes 12 through one radial flow channel 15. Specifically, in the circumferential direction of the stator silicon steel sheet 1a, the first cooling hole 11 and the second cooling hole 12 that communicate with each other through the radial flow channel 15 and a first cooling hole 11 and a second cooling hole 12 that do not communicate with each other through the radial flow channel 15 may be alternately arranged. It may be considered that, in the circumferential direction of the stator silicon steel sheet 1a, a former first cooling hole 11 communicates with a former second cooling hole 12 through the radial flow channel 15, and a latter first cooling hole 11 does not communicate with a latter second cooling hole 12. Alternatively, in the circumferential direction of the stator silicon steel sheet 1a, a former first cooling hole 11 does not communicate with a former second cooling hole 12, and a latter first cooling hole 11 communicates with a latter second cooling hole 12 through the radial flow channel 15.

In some embodiments, as shown in FIG. 4b, an outer circumferential surface of the stator silicon steel sheet 1a includes a plurality of notches 16, and each notch 16 communicates with one first cooling hole 11 in the radial direction of the stator silicon steel sheet 1a. In FIG. 4b, a dashed line shows an example of a communication position between the notch 16 and the first cooling hole 11. The notch 16 enables communication between the first cooling hole 11 and the outer circumferential surface of the stator silicon steel sheet 1a.

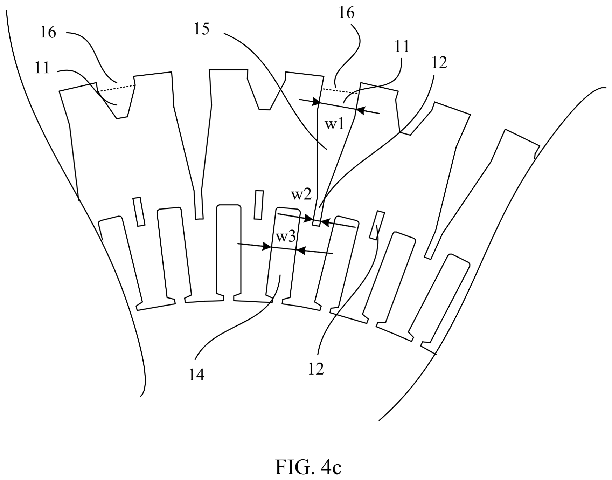

The structure of the stator silicon steel sheet 1a shown in FIG. 4b is used as an example. FIG. 4c is a diagram of a partial structure of the stator silicon steel sheet 1a. In the circumferential direction of the stator silicon steel sheet 1a, a width w1 of the first cooling hole 11 is greater than a width w2 of the second cooling hole 12, and a width of a part that is of the radial flow channel 15 and that is close to the second cooling hole 12 is less than a width of a part that is of the radial flow channel 15 and that is close to the second cooling hole 12. For example, the width of the radial flow channel 15 gradually increases in a direction from the first cooling hole 11 to the second cooling hole 12. In addition, as shown in FIG. 4c, in the circumferential direction of the stator silicon steel sheet 1a, the width w2 of each second cooling hole 12 is less than a width w3 of each groove 14, to ensure strength of the stator silicon steel sheet 1a. This also helps accommodate the stator winding 20 in the groove 14 of the stator silicon steel sheet 1a.

As shown in FIG. 4c, a shape of the first cooling hole 11 that communicates with the second cooling hole 12 through the radial flow channel 15 is different from a shape of the first cooling hole 11 that does not communicate with the second cooling hole 12. Specifically, to communicate with the radial flow channel 15, the shape of the first cooling hole 11 that communicates with the second cooling hole 12 through the radial flow channel 15 is similar to a rectangle. The shape of the first cooling hole 11 that does not communicate with the second cooling hole 12 is an inverted trapezoid, where a short base of the trapezoid is close to the second cooling hole 12, and a long base of the trapezoid communicates with the notch 16. Certainly, this is not limited in embodiments of this application, and shapes of the two may alternatively be the same.

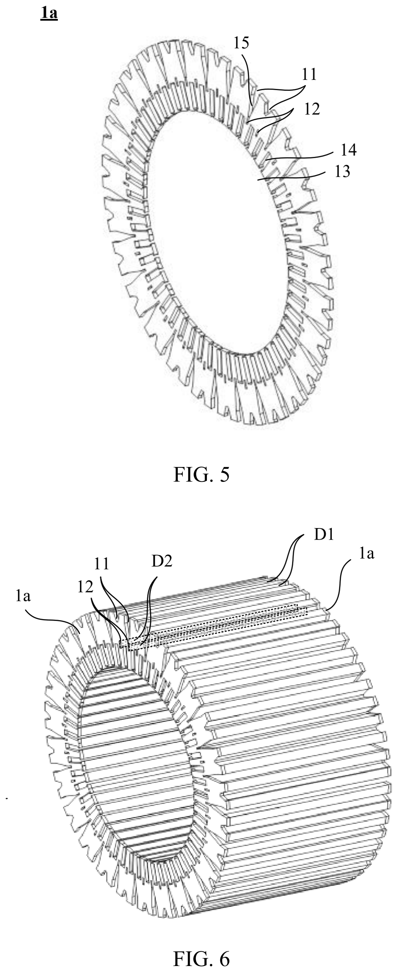

FIG. 5 shows a three-dimensional structure of the stator silicon steel sheet 1a shown in FIG. 4b. In the axial direction of the stator silicon steel sheet 1a, each radial flow channel 15 penetrates the stator silicon steel sheet 1a and communicates with one first cooling hole 11 and one second cooling hole 12. When the plurality of stator silicon steel sheets 1a are adjacently arranged in the axial direction of the stator silicon steel sheet 1a, radial flow channels 15 of two adjacent stator silicon steel sheets 1a may communicate with each other, to improve a flow rate of the coolant.

Possibly, the radial flow channel 15 may alternatively not penetrate the stator silicon steel sheet 1a in the axial direction of the stator silicon steel sheet 1a, that is, the radial flow channel 15 is an inner channel through which the first cooling hole 11 communicates with the second cooling hole 12. When the plurality of stator silicon steel sheets 1a are adjacently arranged in the axial direction of the stator silicon steel sheet 1a, the radial flow channels 15 may not communicate with each other or may partially communicate with each other.

In the following embodiment, the structure shown in FIG. 5 is used as an example for description of the stator silicon steel sheet 1a, that is, an example in which the radial flow channel 15 penetrates the stator silicon steel sheet 1a in the axial direction of the stator silicon steel sheet 1a is used. In addition, for ease of illustration, when the first cooling hole 11 communicates with the outer circumferential surface of the stator silicon steel sheet 1a, the notch 16 is not shown.

In the stator silicon steel sheet 1a provided in this embodiment of this application, the coolant may flow through the first cooling hole 11, and the coolant may also flow through the second cooling hole 12. When the plurality of stator silicon steel sheets 1a are arranged in the axial direction of the stator core 10 to form the stator core 10 or a part of the stator core 10, as shown in FIG. 6, the plurality of first cooling holes 11 of the plurality of stator silicon steel sheets 1a may communicate with each other to form a plurality of outer-layer cooling channels D1, and the plurality of second cooling holes 12 may communicate with each other to form inner-layer cooling channels D2. Herein, two adjacent inner-layer cooling channels D2 in the circumferential direction of the stator silicon steel sheet 1a are illustrated by using dashed shadows. To facilitate display of the outer-layer cooling channel D1 and the inner-layer cooling channel D2, FIG. 6 shows only two stator silicon steel sheets 1a at two ends in the axial direction of the stator silicon steel sheet 1a, and seams between the plurality of stator silicon steel sheets 1a in the middle are not shown. It should be understood that, when the first cooling hole 11 communicates with the outer circumferential surface of the stator silicon steel sheet 1a, the outer-layer cooling channel D1 is equivalent to being located on an outer circumferential surface of the stator core 10.

Still refer to FIG. 6. The plurality of outer-layer cooling channels D1 extend in the axial direction of the stator silicon steel sheet 1a, and are spaced from each other in the circumferential direction of the stator silicon steel sheet 1a. The plurality of inner-layer cooling channels D2 extend in the axial direction of the stator silicon steel sheet 1a, and are spaced from each other in the circumferential direction of the stator silicon steel sheet 1a. In a radial direction of the stator core 10, the inner-layer cooling channel D2 is closer to the center of the stator core 10, and the outer-layer cooling channel D1 is closer to the outer circumferential surface of the stator core 10. A part of the first cooling hole 11 communicates with the second cooling hole 12 through the radial flow channel 15 of the stator silicon steel sheet 1a, so that a part of the outer-layer cooling channel D1 communicates with a part of the inner-layer cooling channel D2, and coolant in the outer-layer cooling channel D1 communicates with coolant in the inner-layer cooling channel D2. This facilitates circulation of the coolant between the outer-layer cooling channel D1 and a part of the inner-layer cooling channel D2. When coolant is fed into the stator core 10 for heat dissipation, the coolant may be fed into the outer-layer cooling channel D1, and the coolant in the outer-layer cooling channel D1 may flow into the inner-layer cooling channel D2 through the radial flow channel 15. Alternatively, coolant may be fed into the inner-layer cooling channel D2, and the coolant in the inner-layer cooling channel D2 may flow into the outer-layer cooling channel D1 through the radial flow channel 15. Therefore, the stator core 10 provided in this embodiment of this application can implement the inner-layer liquid cooling channel and the outer-layer liquid cooling channel, to improve liquid cooling effect.

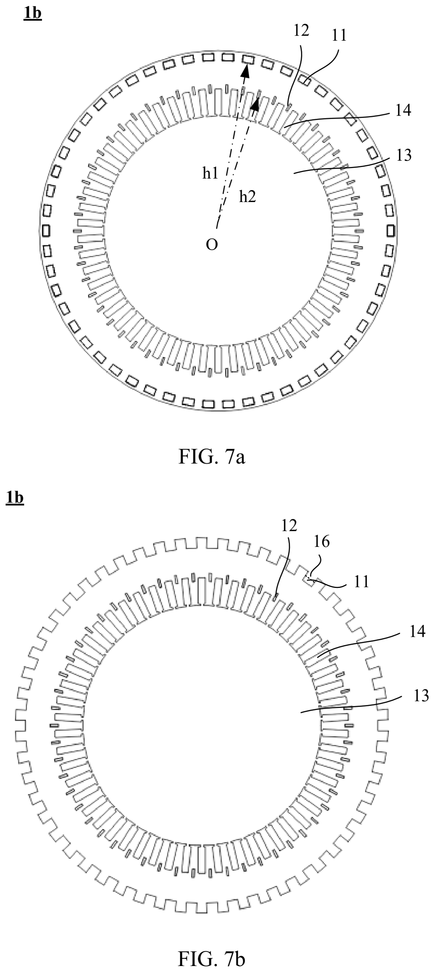

In some embodiments, in the stator core 10 provided in this embodiment of this application, the plurality of silicon steel sheets 1 include at least one first silicon steel sheet 1b. As shown in FIG. 7a, the first silicon steel sheet 1b includes a plurality of first cooling holes 11, a plurality of second cooling holes 12, a central hole 13, and a plurality of grooves 14. In an axial direction of the first silicon steel sheet 1b, each first cooling hole 11, each second cooling hole 12, each groove 14, and the central hole 13 penetrate the first silicon steel sheet 1b. In a circumferential direction of the first silicon steel sheet 1b, the plurality of first cooling holes 11 are spaced from each other, and the plurality of second cooling holes 12 are spaced from each other. In a radial direction of the first silicon steel sheet 1b, a distance h1 between each first cooling hole 11 and a center O of the first silicon steel sheet 1b is greater than a distance h2 between each second cooling hole 12 and the center O of the first silicon steel sheet 1b.

For example, as shown in FIG. 7a, in the first silicon steel sheet 1b in this embodiment of this application, a quantity of the first cooling holes 11 is the same as a quantity of the second cooling holes 12. In the radial direction of the first silicon steel sheet 1b, each first cooling hole 11 corresponds to one second cooling hole 12, and the first cooling hole 11 and the second cooling hole 12 are adjacently arranged. A quantity of the grooves 14 is the same as the quantity of the second cooling holes 12. In the circumferential direction of the first silicon steel sheet 1b, each second cooling hole 12 is arranged between two adjacent grooves 14, so that the second cooling holes 12 are distributed more evenly, and coolant in the second cooling hole 12 can evenly dissipate heat for the stator winding 20 wound in the groove 14. In addition, the second cooling hole 12 disposed between the two adjacent grooves 14 may be closer to the center of the first silicon steel sheet 1b, so that the coolant in the second cooling hole 12 is closer to the stator winding 20 wound in the groove 14. A heat transfer path is shorter, improving heat dissipation efficiency.

In some embodiments, as shown in FIG. 7b, an outer circumferential surface of the first silicon steel sheet 1b includes a plurality of notches 16, and each notch 16 communicates with one first cooling hole 11 in the radial direction of the first silicon steel sheet 1b. In FIG. 7b, a dashed line shows an example of a communication position between the notch 16 and the first cooling hole 11. The notch 16 enables communication between the first cooling hole 11 and the outer circumferential surface of the first silicon steel sheet 1b.

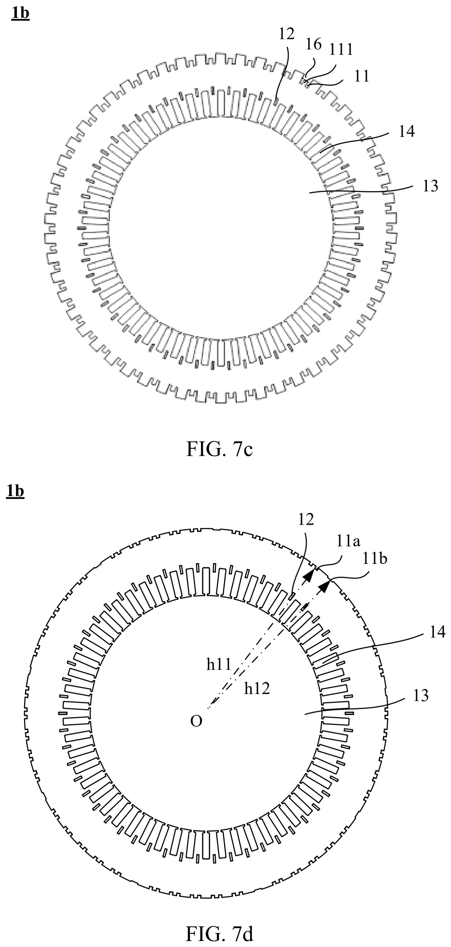

The structure of the first silicon steel sheet 1b shown in FIG. 7b is used as an example. In some embodiments, as shown in FIG. 7c, the first cooling hole 11 includes a plurality of protrusions 111. In the radial direction of the first silicon steel sheet 1b, each protrusion 111 in the first silicon steel sheet 1b is fastened to a hole wall of the first cooling hole 11 and extends in a direction away from the central hole 13.

FIG. 7d shows another structure of the first silicon steel sheet 1b. As shown in FIG. 7d, there are two types of first cooling holes 11 of the first silicon steel sheet 1b: a first cooling hole 11a and a first cooling hole 11b. For ease of illustration, when the first cooling hole 11 in FIG. 7d communicates with the outer circumferential surface of the first silicon steel sheet 1b, the notch 16 is not shown. A protrusion 111 is disposed in the first cooling hole 11a, and no protrusion 111 is disposed in the first cooling hole 11b. In the circumferential direction of the first silicon steel sheet 1b, an arrangement rule of the first cooling holes 11a and the first cooling holes 11b is not limited. In addition, in the radial direction of the first silicon steel sheet 1b, a distance h11 between the first cooling hole 11a and the center O of the first silicon steel sheet 1b may be different from a distance h12 between the first cooling hole 11b and the center O of the first silicon steel sheet 1b.

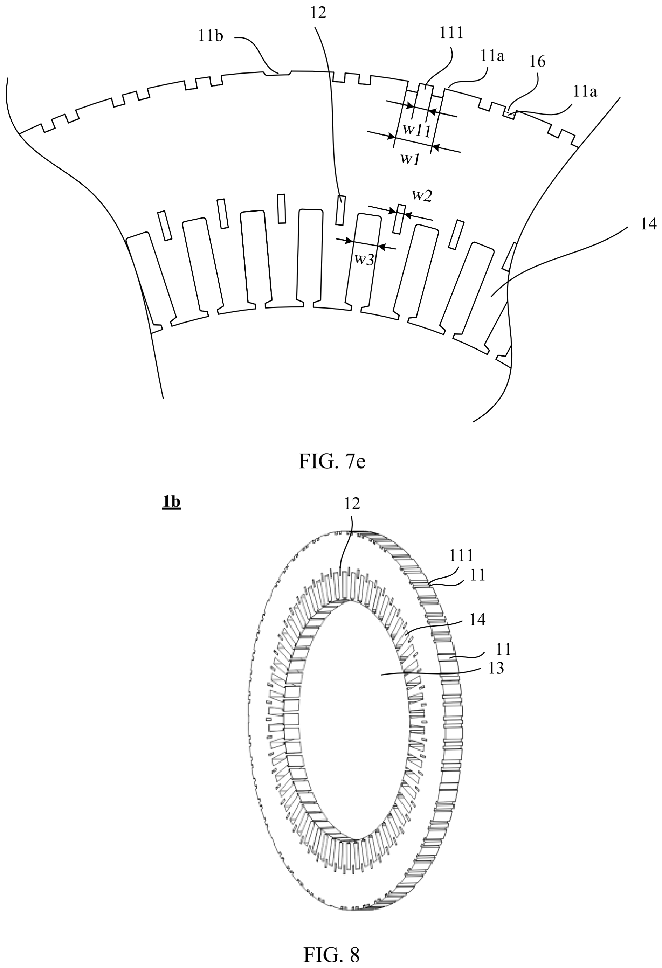

FIG. 7e shows an example of a partial structure of the first silicon steel sheet 1b shown in FIG. 7d. In the circumferential direction of the first silicon steel sheet 1b, a width w11 of each protrusion 111 is less than a width w1 of each first cooling hole 11. In the circumferential direction of the first silicon steel sheet 1b, the protrusion 111 may divide the first cooling hole 11 into two parts. It should be understood that there may be a plurality of protrusions 111, and the plurality of protrusions 111 may be spaced from each other in the circumferential direction of the first silicon steel sheet 1b, to divide the first cooling hole 11 into a plurality of parts. The protrusion 111 can divide the first cooling hole 11 in the circumferential direction of the first silicon steel sheet 1b, to change a circulation cross-sectional area of the first cooling hole 11, so as to change a circulation rate of the coolant. The protrusion 111 may extend to a range of the notch 16. In the circumferential direction of the stator silicon steel sheet 1a, the width w1 of the first cooling hole 11 is greater than a width w2 of the second cooling hole 12. In the circumferential direction of the first silicon steel sheet 1b, the width w2 of each second cooling hole 12 is less than a width w3 of each groove 14, to ensure strength of the first silicon steel sheet 1b.

FIG. 8 shows a three-dimensional structure of the first silicon steel sheet 1b shown in FIG. 7e. In the following embodiment, the first silicon steel sheet 1 is described by using the structure shown in FIG. 8 as an example. For ease of illustration, when the first cooling hole 11 communicates with the outer circumferential surface of the first silicon steel sheet 1b, the notch 16 is not shown.

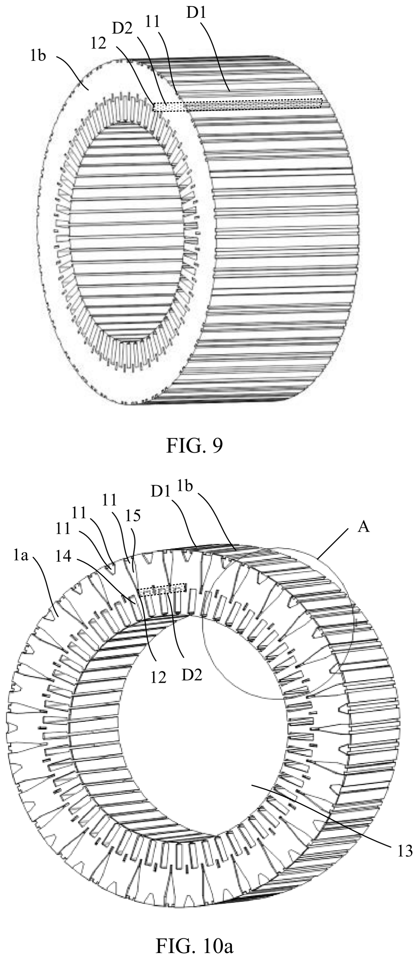

In the first silicon steel sheet 1b provided in this embodiment of this application, the coolant may flow through the first cooling hole 11, and the coolant may also flow through the second cooling hole 12. When the plurality of first silicon steel sheets 1b are arranged in the axial direction of the stator core 10 to form the stator core 10 or a part of the stator core 10, as shown in FIG. 9, the plurality of first cooling holes 11 of the plurality of first silicon steel sheets 1b may communicate with each other to form a plurality of outer-layer cooling channels D1, and the plurality of second cooling holes 12 may communicate with each other to form inner-layer cooling channels D2. Herein, one inner-layer cooling channel D2 is illustrated by using a dashed shadow. To facilitate display of the outer-layer cooling channel D1 and the inner-layer cooling channel D2, FIG. 9 shows only an overall structure of the plurality of first silicon steel sheets 1b that are adjacently arranged, and seams between the plurality of first silicon steel sheets 1b are not shown. Certainly, the structure shown in FIG. 9 may also be considered as a first silicon steel sheet 1b with a large thickness.

In some embodiments, the stator core 10 includes at least one stator silicon steel sheet 1a and at least one first silicon steel sheet 1b. In the axial direction of the stator core 10, one of the at least one first silicon steel sheet 1b and one of the at least one stator silicon steel sheet 1a are adjacently arranged. For example, as shown in FIG. 10a, one first silicon steel sheet 1b and one stator silicon steel sheet 1a are adjacently arranged in the axial direction of the stator core 10. The central hole 13 of the stator silicon steel sheet 1a communicates with the central hole 13 of the first silicon steel sheet 1b, the groove 14 of the stator silicon steel sheet 1a communicates with the groove 14 of the first silicon steel sheet 1b, the plurality of first cooling holes 11 of the stator silicon steel sheet 1a respectively communicate with the plurality of first cooling holes 11 of the first silicon steel sheet 1b to form a plurality of outer-layer cooling channels D1, and the plurality of second cooling holes 12 of the stator silicon steel sheet 1a respectively communicate with the plurality of second cooling holes 12 of the first silicon steel sheet 1b to form a plurality of inner-layer cooling channels D2. Herein, one inner-layer cooling channel D2 is illustrated by using a dashed shadow.

When there are two or more stator silicon steel sheets 1a, one stator silicon steel sheet 1a and the first silicon steel sheet 1b are arranged in a manner shown in FIG. 10a, and another stator silicon steel sheet 1a of the at least one stator silicon steel sheet 1a is arranged on the other side that is of the one stator silicon steel sheet 1a and that is away from the first silicon steel sheet 1b. In other words, in the axial direction of the first silicon steel sheet 1b, a plurality of stator silicon steel sheets 1a may be adjacently arranged at one end of the first silicon steel sheet 1b. For the stator silicon steel sheets 1a that are adjacently arranged, one radial flow channel 15 of one stator silicon steel sheet 1a communicates with one radial flow channel 15 of another stator silicon steel sheet 1a. In this way, the outer-layer cooling channel D1 can communicate with the inner-layer cooling channel D2 through the stator silicon steel sheets 1a. When the stator silicon steel sheets 1a are adjacently arranged on one side of the at least one first silicon steel sheet 1b, the outer-layer cooling channel D1 and the inner-layer cooling channel D2 of the stator core 10 communicate with each other on the side of the at least one first silicon steel sheet 1b.

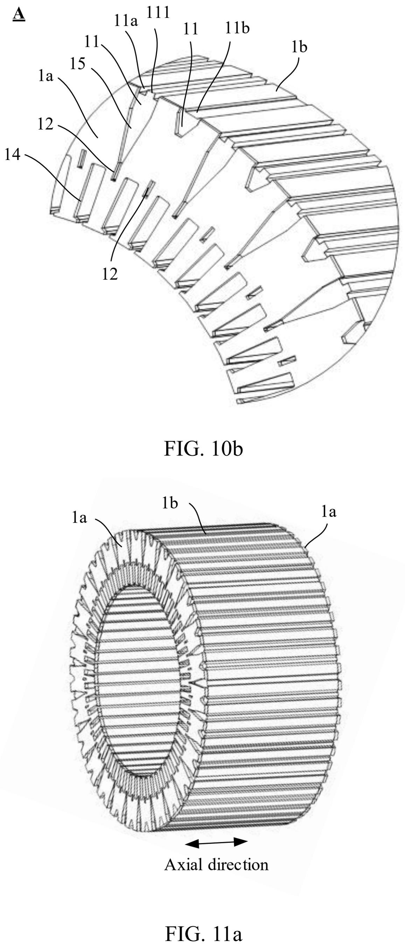

With reference to FIG. 10a, FIG. 10b is an enlarged view of a position A in FIG. 10a. Refer to both FIG. 10a and FIG. 10b. There are two types of first cooling holes 11 of the first silicon steel sheet 1b: the first cooling hole 11a and the first cooling hole 11b. The protrusion 111 is disposed in the first cooling hole 11a. The first cooling hole 11a of the first silicon steel sheet 1b communicates with the first cooling hole 11 of the stator silicon steel sheet 1a, and the width of the protrusion 111 is less than the width of the first cooling hole 11 of the stator silicon steel sheet 1a.

In some embodiments, in the axial direction of the stator core 10, a part of the at least one stator silicon steel sheet 1a are adjacently arranged on one side of the at least one first silicon steel sheet 1b, and the other part of the at least one stator silicon steel sheet 1a are adjacently arranged on the other side of the at least one first silicon steel sheet 1b. For example, as shown in FIG. 11a, in the axial direction of the stator core 10, two stator silicon steel sheets 1a are adjacently arranged on two sides of the first silicon steel sheet 1b.

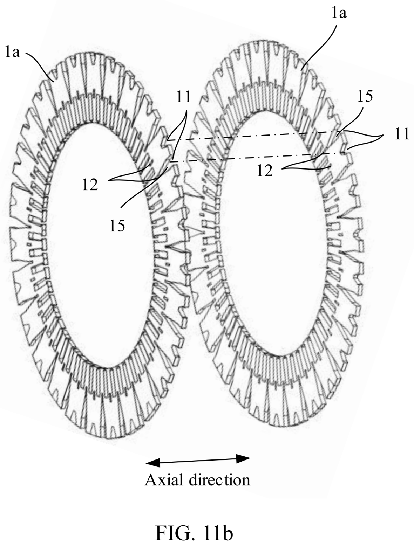

With reference to FIG. 11a, with the first silicon steel sheet 1b omitted, a structure of the two stator silicon steel sheets 1a are shown in FIG. 11b. Refer to both FIG. 11a and FIG. 11b. The two stator silicon steel sheets 1a each include a plurality of first cooling holes 11 and a plurality of second cooling holes 12, the plurality of first cooling holes 11 are arranged in the circumferential direction of the stator silicon steel sheets 1a, and the plurality of second cooling holes 12 are arranged in the circumferential direction of the stator silicon steel sheet 1a. In the radial direction of the stator silicon steel sheet 1a, the first cooling hole 11 and the second cooling hole 12 are spaced from each other. Between any two adjacent first cooling holes 11, one first cooling hole 11 communicates with a corresponding second cooling hole 12 through the radial flow channel 15, and the other first cooling hole 11 does not communicate with a corresponding second cooling hole 12. One first cooling hole 11 that is in one stator silicon steel sheet 1a and that communicates with the second cooling hole 12 through the radial flow channel 15 corresponds to one first cooling hole 11 that is in the other stator silicon steel sheet 1a and that does not communicate with the second cooling hole 12 in the axial direction of the stator core 10. It may be considered that the two stator silicon steel sheets 1a are deflected relative to each other by a specified angle around a central axis of the stator core 10, and the specified angle is a central angle between two first cooling holes 11.

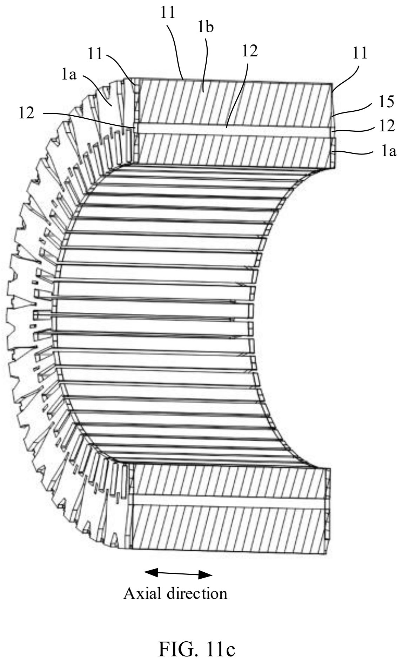

FIG. 11c is a diagram of a cross-sectional structure of two stator silicon steel sheets 1a and one first silicon steel sheet 1b. In the axial direction of the stator core 10, one end of the first cooling hole 11 of the first silicon steel sheet 1b communicates with a first cooling hole 11 of one stator silicon steel sheet 1a, and the first cooling hole 11 does not communicate with a corresponding second cooling hole 12. The other end of the first cooling hole 11 of the first silicon steel sheet 1b communicates with a first cooling hole 11 of the other stator silicon steel sheet 1a, and the first cooling hole 11 communicates with a corresponding second cooling hole 12 through the radial flow channel 15.

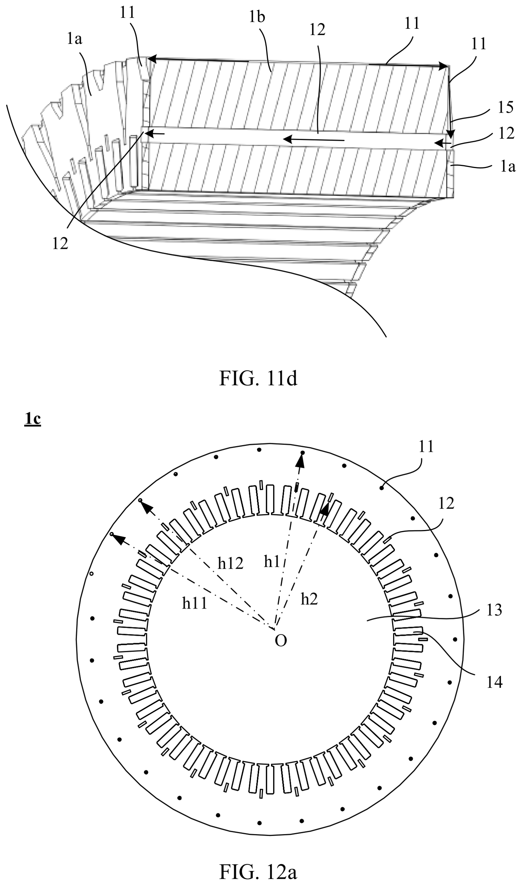

FIG. 11d shows a partial structure in FIG. 11c. For example, coolant is fed into the first cooling hole 11 of the first silicon steel sheet 1b, and the coolant may flow to the first cooling holes 11 of the two stator silicon steel sheets 1a through the first cooling hole 11. Coolant in a first cooling hole 11 in one stator silicon steel sheet 1a may flow to the second cooling hole 12 through the radial flow channel 15, and then flow to the second cooling hole 12 in the first silicon steel sheet 1b through the second cooling hole 12. The coolant in the second cooling hole 12 of the first silicon steel sheet 1b may flow to a second cooling hole 12 of the other stator silicon steel sheet 1a. For a flow direction of the coolant, refer to an arrow in FIG. 11d. It can be learned that the inner-layer cooling channel and the outer-layer cooling channel can communicate with each other through the radial flow channel of the stator silicon steel sheet 1a, so that coolant flows into the first cooling hole 11 and the second cooling hole 12 of each silicon steel sheet, to implement good cooling effect.

Still refer to FIG. 11d. The flow direction of the coolant shown by the arrow is a coolant flow path, and the stator core 10 shown in FIG. 11a can form a plurality of coolant flow paths. Based on the arrangement structures of the stator silicon steel sheet 1a and the first silicon steel sheet 1b shown in FIG. 11a to FIG. 11d, in the circumferential direction of the stator core 10, flow directions of coolant in any two adjacent coolant flow paths are opposite.

In some embodiments, the silicon steel sheet 1 of the stator core 10 provided in this embodiment of this application includes a plurality of second silicon steel sheets 1c. As shown in FIG. 12a, the second silicon steel sheet 1c includes a plurality of first cooling holes 11, a plurality of second cooling holes 12, a central hole 13, and a plurality of grooves 14. In an axial direction of the second silicon steel sheet 1c, each first cooling hole 11, each second cooling hole 12, each groove 14, and the central hole 13 penetrate the second silicon steel sheet 1c. In a circumferential direction of the second silicon steel sheet 1c, the plurality of first cooling holes 11 are spaced from each other, and the plurality of second cooling holes 12 are spaced from each other. In a radial direction of the second silicon steel sheet 1c, a distance h1 between each first cooling hole 11 and a center O of the second silicon steel sheet 1c is greater than a distance h2 between each second cooling hole 12 and the center O of the second silicon steel sheet 1c.

For example, as shown in FIG. 12a, in the second silicon steel sheet 1c in this embodiment of this application, a quantity of the first cooling holes 11 is the same as a quantity of the second cooling holes 12. In the radial direction of the second silicon steel sheet 1c, each first cooling hole 11 corresponds to one second cooling hole 12, and the first cooling hole 11 and the second cooling hole 12 are adjacently arranged. A quantity of the grooves 14 is twice the quantity of the second cooling holes 12. In the circumferential direction of the second silicon steel sheet 1c, one second cooling hole 12 is disposed in every two grooves 14, and the second cooling hole 12 is arranged between two adjacent grooves 14.

In the second silicon steel sheet 1c shown in FIG. 12a, distances between the plurality of first cooling holes 11 and the center O of the second silicon steel sheet 1c change in the circumferential direction of the second silicon steel sheet 1c. For example, in two adjacent first cooling holes 11, a distance h11 between one first cooling hole 11 and the center O of the second silicon steel sheet 1c is greater than a distance h12 between the other first cooling hole 11 and the center O of the second silicon steel sheet 1c. For example, the distances between the plurality of first cooling holes 11 of the second silicon steel sheet 1c and the center O of the second silicon steel sheet 1c gradually increase. For example, the plurality of first cooling holes 11 are distributed along an asymptote, and a distance between the center O of the second silicon steel sheet 1c and a first cooling hole 11 closest to the center O of the second silicon steel sheet 1c serves as a radius of a base circle of the asymptote.

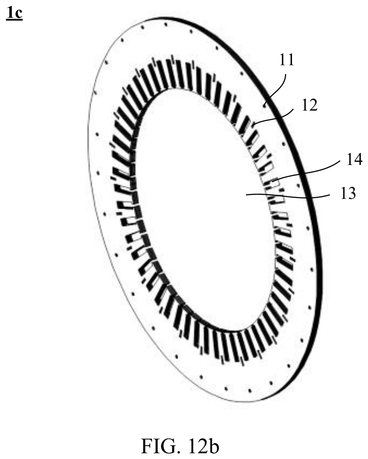

For each second silicon steel sheet 1c, in a clockwise direction, the first cooling hole 11 closest to the center O of the second silicon steel sheet 1c is a 1^{st} first cooling hole 11, and distances between the center O of the second silicon steel sheet 1c and a plurality of first cooling holes 11 followed by the 1^{st} first cooling hole 11 gradually increase. A distance between a (k+1)^{th} first cooling hole 11 and the center O of the second silicon steel sheet 1c is greater than a distance between a k^{th} first cooling hole 11 and the center O of the second silicon steel sheet 1c. FIG. 12b shows a three-dimensional structure of the second silicon steel sheet 1c. In the following embodiment, the structure of the second silicon steel sheet 1c shown in FIG. 12b is used as an example for description.

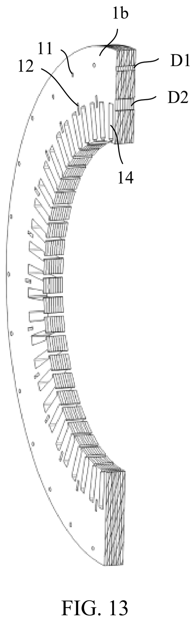

FIG. 13 shows an example of a cross-sectional structure of a plurality of second silicon steel sheets 1c along the second silicon steel sheet 1c, and the plurality of second silicon steel sheets 1c are adjacently arranged in the axial direction of a layer 1 of the second silicon steel sheet. In the axial direction of the second silicon steel sheet 1c, for two adjacent second silicon steel sheets 1c, a plurality of first cooling holes 11 of one second silicon steel sheet 1c respectively communicate with a plurality of first cooling holes 11 of the other second silicon steel sheet 1c to form a plurality of outer-layer cooling channels D1, and a plurality of second cooling holes 12 of one second silicon steel sheet 1c respectively communicate with a plurality of second cooling holes 12 of the other second silicon steel sheet 1c to form a plurality of inner-layer cooling channels D2. Distances between the center O of the second silicon steel sheet 1c and two adjacent first cooling holes 11 that communicate with each other are equal. The outer-layer cooling channel D1 formed through communication between the plurality of first cooling holes 11 are parallel to the axial direction of the second silicon steel sheet 1c, and the inner-layer cooling channel D2 formed through communication between the plurality of second cooling holes 12 are parallel to the axial direction of the second silicon steel sheet 1c.

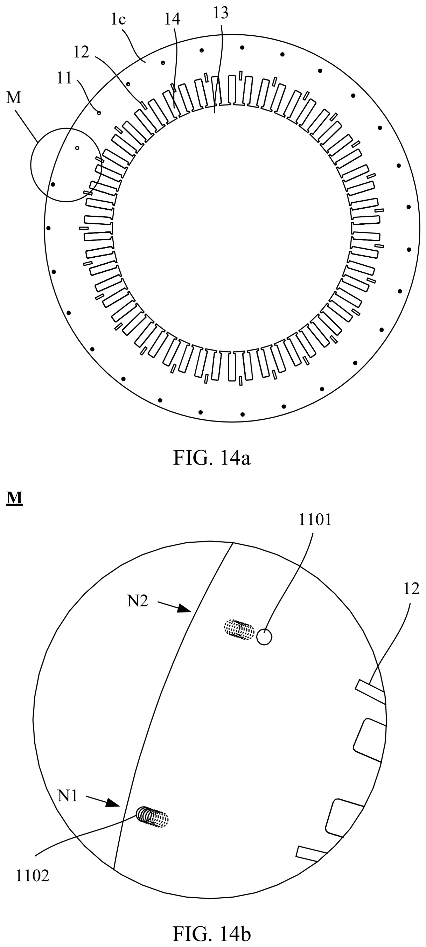

FIG. 14a shows another structure of the plurality of second silicon steel sheets 1c that are adjacently arranged in the axial direction of the second silicon steel sheets 1c. For an enlarged view of a position M in FIG. 14a, refer to FIG. 14b. Two axially adjacent second silicon steel sheets 1c may rotate in the circumferential direction by a specified angle relative to the center of the stator core 10, and the specified angle is an included angle between two adjacent first cooling holes 11 of a same second silicon steel sheet 1c. It may be considered that the two adjacent second silicon steel sheets 1c are circumferentially staggered at the central angle between the two first cooling holes 11.

In FIG. 14b, a first cooling hole 11 that is of each second silicon steel sheet 1c and that is closest to the center O of the second silicon steel sheet 1c is defined as a first cooling hole 1101, and a first cooling hole 11 that is farthest from the center O of the second silicon steel sheet 1c is defined as a first cooling hole 1102. Refer to both FIG. 14a and FIG. 14b. Any two adjacent second silicon steel sheets 1c are deflected relative to each other by a specified angle in the axial direction of the second silicon steel sheet 1c, and the specified angle is the central angle between the two first cooling holes 11.

In the radial direction of the stator core 10, for two first cooling holes 11 that communicate with each other in two adjacent second silicon steel sheets 1c, a distance between a first cooling hole 11 of one second silicon steel sheet 1c and the central hole 13 is greater than a distance between a first cooling hole 11 of the other second silicon steel sheet 1c and the central hole 13. A center of a cooling channel formed by the two cooling holes 11 deviates in the radial direction of the second silicon steel sheet 1c, so that the cooling channel is inclined, and a flow direction of the coolant is changed.

In the circumferential direction of the stator core 10, distances between the central hole 13 and a plurality of first cooling holes 11 of at least one of the one second silicon steel sheet 1c or the other second silicon steel sheet 1c decrease. In other words, distances between the central hole 13 and the plurality of first cooling holes 11 of the one second silicon steel sheet 1c decrease in the circumferential direction of the stator core 10. Alternatively, distances between the central hole 13 and the plurality of first cooling holes 11 of the other second silicon steel sheet 1c decrease in the circumferential direction of the stator core 10. Alternatively, distances between the central hole 13 and the plurality of first cooling holes 11 of each second silicon steel sheet 1c decrease in the circumferential direction of the stator core 10.

The distances between the central hole 13 and the plurality of first cooling holes 11 of the second silicon steel sheet 1c change. After the plurality of second silicon steel sheets 1c are sequentially deflected and stacked, the formed outer-layer cooling channel D1 is inclined in the radial direction of the stator core 10. In this way, the flow direction of the coolant is changed. Specifically, after the plurality of second silicon steel sheets 1c are adjacently arranged, a k^{th} first cooling hole 11 of one second silicon steel sheet 1c communicates with a (k+1)^{th} first cooling hole 11 of another second silicon steel sheet 1c, where k is an integer greater than or equal to 1. A direction of a channel formed by the first cooling holes 11 that communicate with each other is inclined, and the flow direction of the coolant is changed.

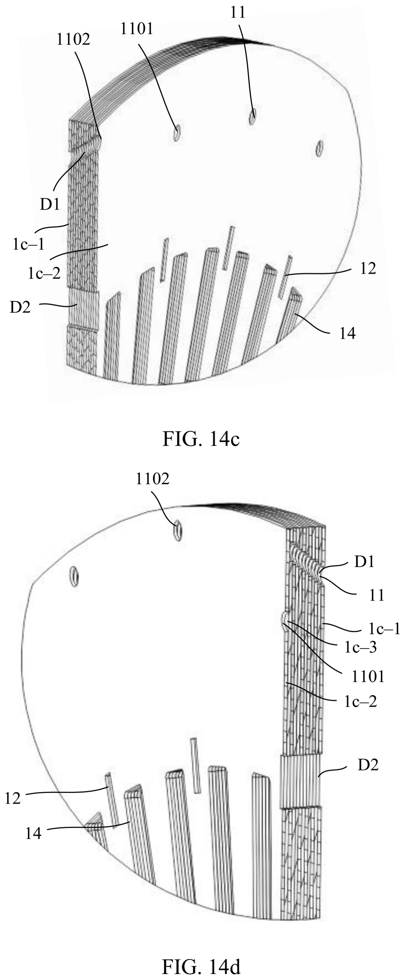

FIG. 14c is a cross-sectional view of an arrangement structure of the plurality of first cooling holes 11 at a position N1 in FIG. 4b. In the axial direction of the second silicon steel sheet 1c, one first cooling hole 11 of a 1^{st} second silicon steel sheet 1c-1 can communicate with a last first cooling hole 1102 of a last second silicon steel sheet 1c-2. In this way, the first cooling holes 11 of the plurality of second silicon steel sheets 1c at this position sequentially communicate with each other to form the outer-layer cooling channel D1. Herein, a k^{th} first cooling hole 11 of an (i+1)^{th} second silicon steel sheet 1c communicates with a (k+1)^{th} first cooling hole 11 of an i^{th} second silicon steel sheet 1c, a direction of the outer-layer cooling channel D1 herein is inclined in the radial direction of the stator core 10, so that the coolant is deflected outward or inward in the radial direction of the stator core 10. When the coolant flows through the outer-layer cooling channel D1, an included angle is formed between the flow direction of the coolant and the axial direction of the stator core 10. It should be understood that, when a distance between any two circumferentially adjacent first cooling holes 11 of the second silicon steel sheet 1c changes, the direction of the outer-layer cooling channel D1 is inclined in the circumferential direction of the stator core 10. In this way, the coolant is eccentrically deflected in the circumferential direction of the stator core 10. When a communication manner of the first cooling hole 11 is inclined in both the circumferential direction and the radial direction of the stator core 10, the stator core 10 can finally implement rotary spraying of the coolant. Certainly, a spraying direction of the coolant may be irregular. This is not limited in embodiments of this application.

FIG. 14d is a cross-sectional view of an arrangement structure of the plurality of first cooling holes 11 at a position N2 in FIG. 14b. In the axial direction of the second silicon steel sheet 1c, one first cooling hole 11 of the 1^{st} second silicon steel sheet 1c-1 can communicate with a first cooling hole 11 of a second silicon steel sheet 1c-3 adjacent to the last second silicon steel sheet 1c-2, to form an outer-layer cooling channel D1. A 1^{st} first cooling hole 1101 of the last second silicon steel sheet 1c-2 is blocked by the second silicon steel sheet 1c-3. As a result, the outer-layer cooling channel D1 is blocked by the last second silicon steel sheet 1c-2.

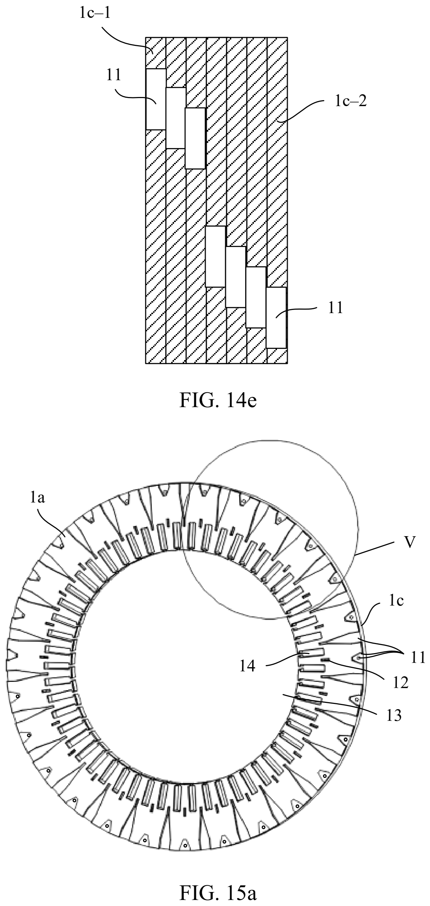

When the plurality of second silicon steel sheets 1c are axially arranged, between any two adjacent second silicon steel sheets 1c, one first cooling hole 11 is always blocked. As a result, the outer-layer cooling channel D1 is blocked and cannot be in communication. It should be understood that, when the outer-layer cooling channel D1 is blocked by a second silicon steel sheet 1c, for first cooling holes 11 at different angles, the second silicon steel sheet 1c that blocks the outer-layer cooling channel D1 may be one of the second silicon steel sheets 1c, and the second silicon steel sheet 1c is not limited to second silicon steel sheets 1c on the two sides. FIG. 14e shows a case in which the outer-layer cooling channel D1 is blocked because first cooling holes 11 of two second silicon steel sheets 1c between the 1^{st} second silicon steel sheet 1c-1 and the last second silicon steel sheet 1c-2 do not communicate with each other.

FIG. 15a shows a structure of the stator silicon steel sheet 1a and the second silicon steel sheet 1c that are adjacently arranged in the axial direction of the stator core 10. As shown in FIG. 15a, the central hole 13 of the stator silicon steel sheet 1a communicates with the central hole 13 of the second silicon steel sheet 1c, the quantity of the plurality of grooves 14 of the stator silicon steel sheet 1a is the same as the quantity of the plurality of grooves 14 of the second silicon steel sheet 1c, and the plurality of grooves 14 of the stator silicon steel sheet 1a may respectively communicate with the plurality of grooves 14 of the second silicon steel sheet 1c. The quantity of the plurality of first cooling holes 11 of the second silicon steel sheet 1c is less than the quantity of the stator silicon steel sheets 1a. Therefore, a part of the first cooling holes 11 of the stator silicon steel sheet 1a may be blocked by the second silicon steel sheet 1c, and the outer-layer cooling channel D1 herein is blocked in the axial direction of the stator core 10. In this case, the coolant cannot be sprayed out of the first cooling hole 11 of the second silicon steel sheet 1c. The second cooling hole 12 of the stator silicon steel sheet 1a communicates with the second cooling hole 12 of the second silicon steel sheet 1c, and a part of the first cooling holes 11 of the stator silicon steel sheet 1a communicates with the first cooling holes 11 of the second silicon steel sheet 1c.

Similarly, when the second silicon steel sheet 1c is arranged with the first silicon steel sheet 1b, the quantity of the plurality of first cooling holes 11 of the second silicon steel sheet 1c is less than the quantity of the first silicon steel sheets 1b. Therefore, a part of the first cooling holes 11 of the first silicon steel sheet 1b may be blocked by the second silicon steel sheet 1c, and the outer-layer cooling channel D1 herein is blocked in the axial direction of the stator core 10. In this case, the coolant cannot be sprayed out of the first cooling hole 11 of the second silicon steel sheet 1c. The second cooling hole 12 of the first silicon steel sheet 1b communicates with the second cooling hole 12 of the second silicon steel sheet 1c, and a part of the first cooling holes 11 of the first silicon steel sheet 1b communicates with the first cooling holes 11 of the second silicon steel sheet 1c.

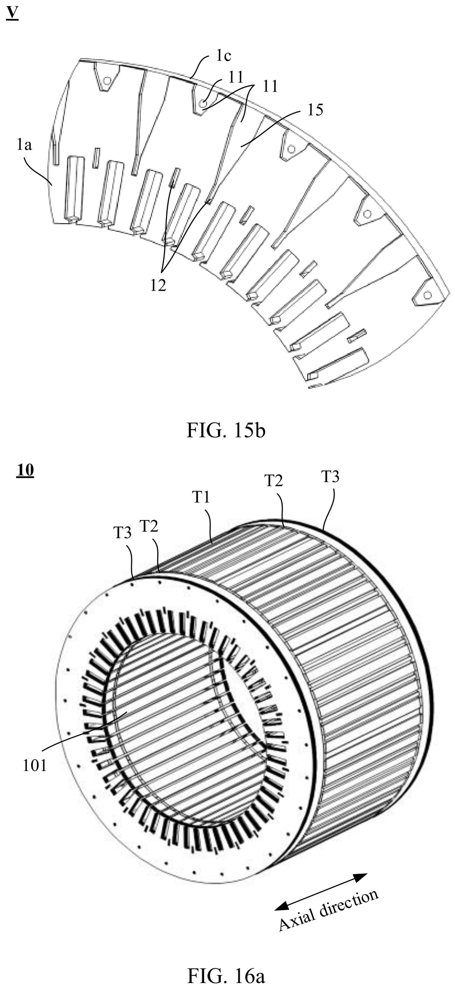

For example, FIG. 15b is an enlarged view of a position V in FIG. 15a. The quantity of the first cooling holes 11 of the stator silicon steel sheet 1a is twice the quantity of the first cooling holes 11 of the second silicon steel sheet 1c, the first cooling hole 11 that is of the stator silicon steel sheet 1a and that does not communicate with the second cooling hole 12 communicates with the first cooling hole 11 of the second silicon steel sheet 1c, and the first cooling hole 11 that is of the stator silicon steel sheet 1a and that communicates with the second cooling hole 12 through the radial flow channel 15 is blocked by the second silicon steel sheet 1c. The radial flow channel 15 of the stator silicon steel sheet 1a and the second cooling hole 12 that communicates with the radial flow channel 15 are also blocked by the second silicon steel sheet 1c. A hole diameter of the first cooling hole 11 of the second silicon steel sheet 1c is less than a hole diameter of the first cooling hole 11 of the stator silicon steel sheet 1a. When the coolant in the first cooling hole 11 of the stator silicon steel sheet 1a flows into the first cooling hole 11 of the second silicon steel sheet 1c, a flow rate of the coolant increases because a flow hole diameter decreases. It should be understood that, in some embodiments, the first cooling hole 11 that is of the stator silicon steel sheet 1a and that communicates with the second cooling hole 12 through the radial flow channel 15 communicates with the first cooling hole 11 of the second silicon steel sheet 1c, and the first cooling hole 11 that is of the stator silicon steel sheet 1a and that communicates with the second cooling hole 12 is blocked by the second silicon steel sheet 1c. In specific application, a fitting angle between the stator silicon steel sheet 1a and the second silicon steel sheet 1c is adjusted, to control whether the plurality of first cooling holes 11 can communicate with each other to form a channel for coolant to flow, and adjust a flow path of the coolant to meet a cooling requirement. When there are a plurality of second silicon steel sheets 1c, the plurality of second silicon steel sheets 1c may be sequentially arranged on one side of the stator silicon steel sheet 1a. It may be considered that one second silicon steel sheet 1c is arranged between another second silicon steel sheet 1c and one stator silicon steel sheet 1a.

It should be understood that the second silicon steel sheet 1c and the first silicon steel sheet 1b may alternatively be arranged adjacent to each other in the axial direction of the stator core 10. When there are a plurality of second silicon steel sheets 1c, the plurality of second silicon steel sheets 1c may be sequentially arranged on one side of the first silicon steel sheet 1b. It may be considered that one second silicon steel sheet 1c is arranged between another second silicon steel sheet 1c and one first silicon steel sheet 1b.

In the stator core 10 provided in this embodiment of this application, one of the plurality of second silicon steel sheets 1c and another second silicon steel sheet 1c are adjacently arranged, and one second silicon steel sheet 1c is arranged between another second silicon steel sheet 1c and one stator silicon steel sheet 1a, or one second silicon steel sheet 1c is arranged between another second silicon steel sheet 1c and one first silicon steel sheet 1b. In other words, the second silicon steel sheet 1c is arranged at an axial end of the stator core 10, the coolant in the cooling channel of the stator core 10 may be discharged from the first cooling hole 11 and the second cooling hole 12 of the second silicon steel sheet 1c, and the second silicon steel sheet 1c may perform a liquid spraying function. In other words, at least one second silicon steel sheet 1c in this embodiment of this application can form a liquid spraying structure of the stator core 10, and is configured to spray coolant to the axial end of the stator core 10. A hole diameter of a first cooling hole 11 of the one second silicon steel sheet 1c is less than a hole diameter of the first cooling hole 11 of the stator silicon steel sheet 1a or a hole diameter of the first cooling hole 11 of the first silicon steel sheet 1b. When the coolant flows from the first cooling hole 11 of the stator silicon steel sheet 1a to the first cooling hole 11 of the second silicon steel sheet 1c, or the coolant flows from the first cooling hole 11 of the first silicon steel sheet 1b to the first cooling hole 11 of the second silicon steel sheet 1c, because the hole diameter of the first cooling hole 11 decreases, flow pressure of the coolant increases. This increases a rate at which the coolant is sprayed from the first cooling hole 11 of the second silicon steel sheet 1c, and optimizes spraying effect.

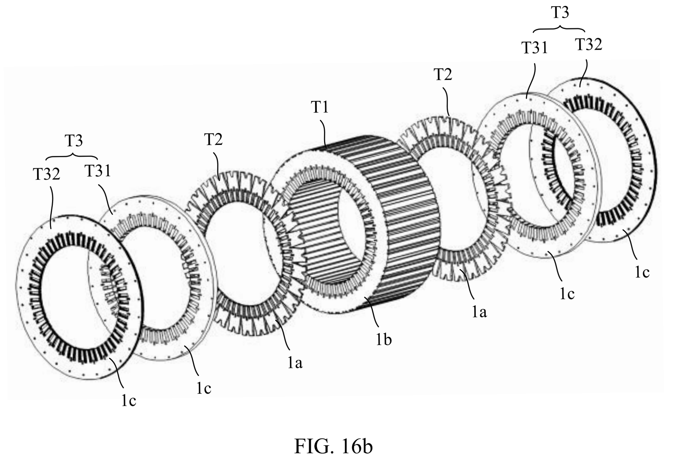

FIG. 16a shows a stator core 10. In an axial direction of the stator core 10, the stator core 10 includes a first structure T1, two second structures T2 located on two sides of the first structure T1, and two third structures T3 respectively located on sides that are of the second structs T2 and that are away from the first structure T1. With reference to the exploded view of the stator core 10 shown in FIG. 16b, the first structure T1 is formed by at least one first silicon steel sheet 1b adjacently arranged in the axial direction of the stator core 10. The second structure T2 is formed by at least one stator silicon steel sheet 1a adjacently arranged in the axial direction of the stator core 10. The third structure T3 includes an inner structure T31 and an outer structure T32, and the inner structure T31 is arranged between the outer structure T32 and the second structure T2. The inner structure T31 is formed by at least one second silicon steel sheet 1c adjacently arranged in the axial direction of the stator core 10 in the arrangement manner shown in FIG. 13. The external structure T32 is formed by at least one second silicon steel sheet 1c adjacently arranged in the axial direction of the stator core 10 in the arrangement manner shown in FIG. 14a to FIG. 14c. In the two second structures T2, any stator silicon steel sheet 1a in one second structure T2 and any stator silicon steel sheet 1a in the other second structure T2 are arranged in a manner shown in FIG. 11b. The stator silicon steel sheet 1a in each second structure T2 and the first silicon steel sheet 1b in the first structure T1 are arranged in a manner shown in FIG. 10a, and the stator silicon steel sheet 1a in each second structure T2 and the first silicon steel sheet 1b in the inner structure T31 are arranged in a manner shown in FIG. 15b.

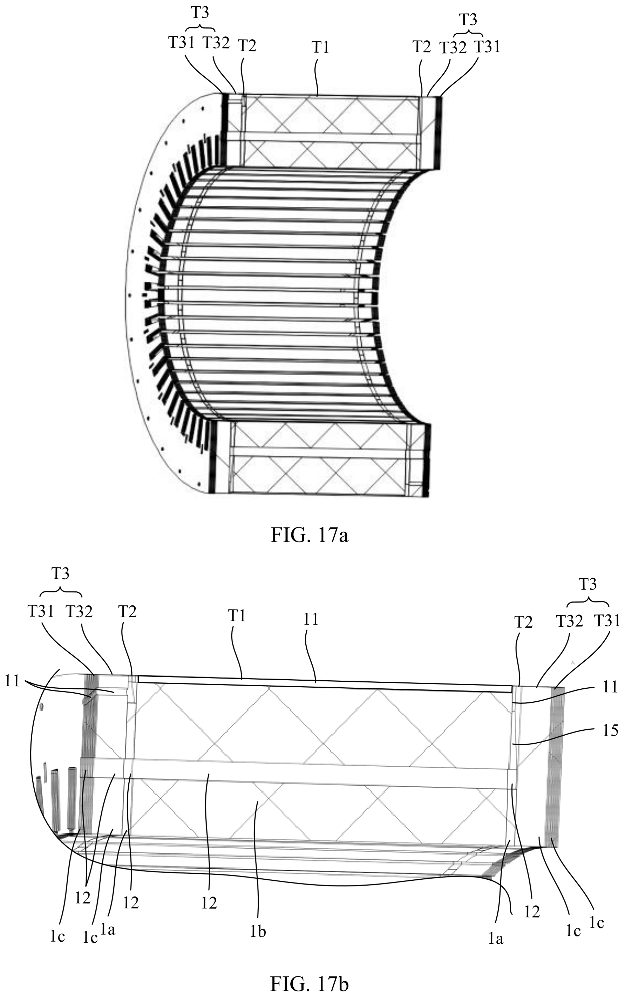

FIG. 17a is a diagram of a cross-sectional structure of the stator core 10, and FIG. 17b is a diagram of a partial cross-sectional structure of the stator core 10 in FIG. 17a. Refer to both FIG. 17a and FIG. 17b. The cross section passes through the first cooling hole 11 of the second silicon steel sheet 1c in the outer structure T32 on the left side. For the first cooling hole 11, the first cooling holes 11 of the second silicon steel sheets 1c in the outer structure T32 on the left side sequentially communicate with each other and communicate with the first cooling holes 11 of the second silicon steel sheets 1c in the inner structure T31 on the left side. The first cooling hole 11 of the second silicon steel sheet 1c in the inner structure T31 on the left side communicates with the first cooling hole 11 of the first silicon steel sheet 1b in the first structure T1 through the first cooling hole 11 of the stator silicon steel sheet 1a in the second structure T2 on the left side. The second silicon steel sheet 1c in the external structure T32 on the right side and the second silicon steel sheet 1c in the inner structure T31 on the right side block the first cooling hole 11 of the stator silicon steel sheet 1a in the second structure T2 on the right side. The stator silicon steel sheet 1a in the second structure T2 on the right side communicates with the first cooling hole 11 of the first silicon steel sheet 1b in the first structure T1. For the second cooling hole 12, the second cooling hole 12 of the second silicon steel sheet 1c in the outer structure T32 on the left side communicates with the second cooling hole 12 of the second silicon steel sheet 1c in the inner structure T31 on the left side. The second cooling hole 12 of the second silicon steel sheet 1c in the inner structure T31 on the left side communicates with the second cooling hole 12 of the first silicon steel sheet 1b in the first structure T1 through the second cooling hole 12 of the stator silicon steel sheet 1a in the second structure T2 on the left side. The second silicon steel sheet 1c in the external structure T32 on the right side and the second silicon steel sheet 1c in the inner structure T31 on the right side block the second cooling hole 12 of the stator silicon steel sheet 1a in the second structure T2 on the right side. The stator silicon steel sheet 1a in the second structure T2 on the right side communicates with the second cooling hole 12 of the first silicon steel sheet 1b in the first structure T1. The first cooling hole 11 communicates with the second cooling hole 12 through the flow channel of the stator silicon steel sheet 1a in the second structure T2 on the right side. A cooling channel formed through communication between the first cooling holes 11 is an outer-layer cooling channel D1, and a cooling channel formed through communication between the second cooling holes 12 is an inner-layer cooling channel D2. The outer-layer cooling channel D1 may communicate with the inner-layer cooling channel D2 through the radial flow channel 15 of the stator silicon steel sheet 1a in the second structure T2 on the right side. When coolant is fed into the cooling channel to perform liquid cooling heat dissipation, the coolant is fed into one of the outer-layer cooling channel D1 and the inner-layer cooling channel D2 to implement inner-layer cooling effect and outer-layer cooling effect.

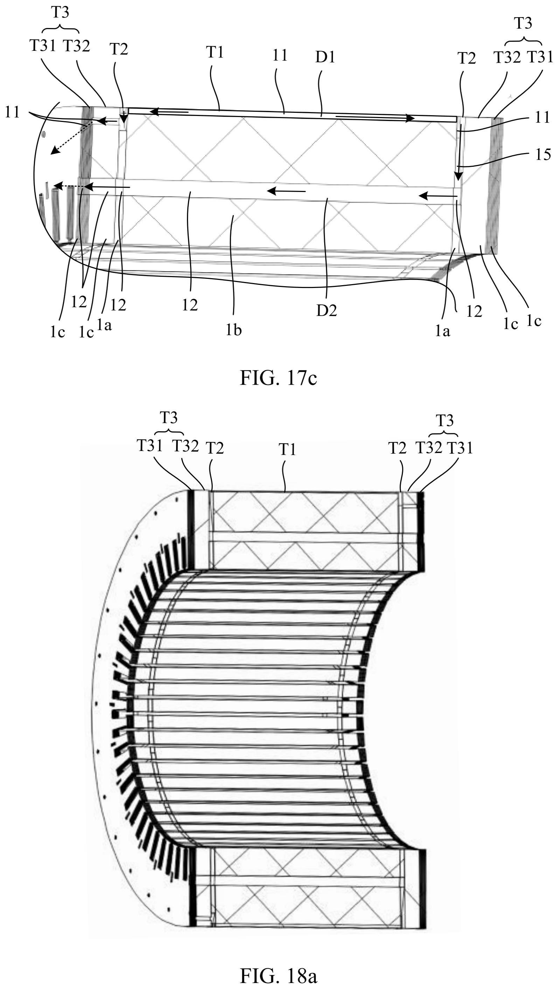

Based on the structure shown in FIG. 17b, FIG. 17c shows an example of a flow path of the coolant. As shown in FIG. 17c, the coolant is fed into the first cooling hole 11 of the first silicon steel sheet 1b. In the axial direction of the stator core 10, the coolant flows into the first cooling holes 11 of the stator silicon steel sheets 1a on the left and right sides. The coolant in the first cooling hole 11 of the stator silicon steel sheet 1a on the left side is obliquely sprayed to an axial center of the stator core 10 after being guided by the first cooling hole 11 of the second silicon steel sheet 1c. The coolant in the first cooling hole 11 of the stator silicon steel sheet 1a on the right side flows into the second cooling hole 12 through the radial flow channel 15, and is sprayed after being guided by the second cooling hole 12 of the first silicon steel sheet 1b, the second cooling hole 12 of the stator silicon steel sheet 1a on the left side, and the first cooling hole 11 of the second silicon steel sheet 1c on the left side. The plurality of first cooling holes 11 of the outer structure T32 on the left side form a channel oblique to the axial center of the stator core 10.

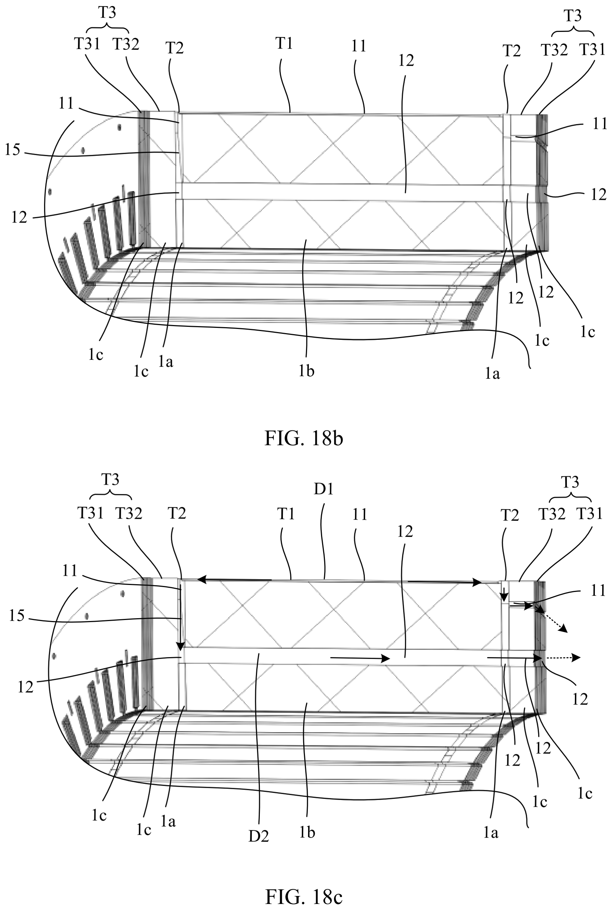

FIG. 18a is a diagram of a cross-sectional structure of the stator core 10 at another position, and FIG. 18b is a diagram of a partial cross-sectional structure of the stator core 10 in FIG. 18a. Refer to both FIG. 18a and FIG. 18b. The cross section passes through the first cooling hole 11 of the second silicon steel sheet 1c in the outer structure T32 on the right side. For the first cooling hole 11, the first cooling holes 11 of the second silicon steel sheets 1c in the outer structure T32 on the right side sequentially communicate with each other and communicate with the first cooling holes 11 of the second silicon steel sheets 1c in the inner structure T31 on the right side. The first cooling hole 11 of the second silicon steel sheet 1c in the inner structure T31 on the right side communicates with the first cooling hole 11 of the first silicon steel sheet 1b in the first structure T1 through the first cooling hole 11 of the stator silicon steel sheet 1a in the second structure T2 on the right side. The second silicon steel sheet 1c in the external structure T32 on the left side and the second silicon steel sheet 1c in the inner structure T31 on the left side block the first cooling hole 11 of the stator silicon steel sheet 1a in the second structure T2 on the left side. The stator silicon steel sheet 1a in the second structure T2 on the left side communicates with the first cooling hole 11 of the first silicon steel sheet 1b in the first structure T1. For the second cooling hole 12, the second cooling hole 12 of the second silicon steel sheet 1c in the outer structure T32 on the left side communicates with the second cooling hole 12 of the second silicon steel sheet 1c in the inner structure T31 on the left side. The second cooling hole 12 of the second silicon steel sheet 1c in the inner structure T31 on the left side communicates with the second cooling hole 12 of the first silicon steel sheet 1b in the first structure T1 through the second cooling hole 12 of the stator silicon steel sheet 1a in the second structure T2 on the left side. The second silicon steel sheet 1c in the external structure T32 on the left side and the second silicon steel sheet 1c in the inner structure T31 on the left side block the second cooling hole 12 of the stator silicon steel sheet 1a in the second structure T2 on the left side. The stator silicon steel sheet 1a in the second structure T2 on the left side communicates with the second cooling hole 12 of the first silicon steel sheet 1b in the first structure T1. The first cooling hole 11 communicates with the second cooling hole 12 through the flow channel of the stator silicon steel sheet 1a in the second structure T2 on the left side. A cooling channel formed through communication between the first cooling holes 11 is an outer-layer cooling channel D1, and a cooling channel formed through communication between the second cooling holes 12 is an inner-layer cooling channel D2. The outer-layer cooling channel D1 may communicate with the inner-layer cooling channel D2 through the radial flow channel 15 of the stator silicon steel sheet 1a in the second structure T2 on the left side. When coolant is fed into the cooling channel to perform liquid cooling heat dissipation, the coolant is fed into one of the outer-layer cooling channel D1 and the inner-layer cooling channel D2 to implement inner-layer cooling effect and outer-layer cooling effect.

Based on the structure shown in FIG. 18b, FIG. 18c shows a flow path of the coolant. As shown in FIG. 18c, the coolant is fed into the first cooling hole 11 of the first silicon steel sheet 1b. In the axial direction of the stator core 10, the coolant flows into the first cooling holes 11 of the stator silicon steel sheets 1a on the left and right sides. The coolant in the first cooling hole 11 of the stator silicon steel sheet 1a on the right side is obliquely sprayed to the axial center of the stator core 10 after being guided by the first cooling hole 11 of the second silicon steel sheet 1c. The coolant in the first cooling hole 11 of the stator silicon steel sheet 1a on the left side flows into the second cooling hole 12 through the radial flow channel 15, and is sprayed after being guided by the second cooling hole 12 of the first silicon steel sheet 1b, the second cooling hole 12 of the stator silicon steel sheet 1a on the right side, and the first cooling hole 11 of the second silicon steel sheet 1c on the right side.

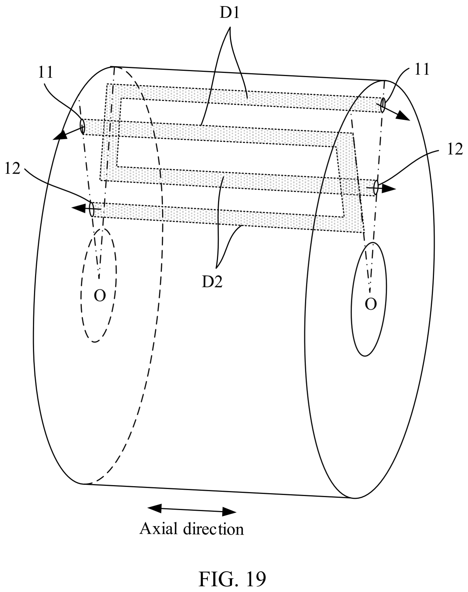

For the entire stator core 10, with reference to the coolant flow diagrams shown in FIG. 17c and FIG. 18c, an arrangement manner of the silicon steel sheets 1 is adjusted, so that the coolant can be separately sprayed on two sides of the stator core 10 in the axial direction. Based on the correspondence between the two stator silicon steel sheets 1a shown in FIG. 11b, the coolant in the outer-layer cooling channels D1 may be sprayed in a staggered manner in the circumferential direction of the stator core 10. In other words, directions of coolant sprayed from any two adjacent outer-layer cooling channels D1 in the circumferential direction of the stator core 10 are opposite. FIG. 19 is a diagram of a structure of two cooling channels that are adjacent in the circumferential direction of the stator core 10. As shown in FIG. 19, in the two cooling channels that are adjacent in the circumferential direction of the stator core 10, an outer-layer cooling channel D1 of one cooling channel communicates with the outside from the first cooling hole 11 on the left side of the stator core 10, and the outer-layer cooling channel D1 communicates with the inner-layer cooling channel D2 on the right side of the stator core 10. An outer-layer cooling channel D1 of the other cooling channel communicates with the outside from the first cooling hole 11 on the right side of the stator core 10, and the outer-layer cooling channel D1 communicates with the inner-layer cooling channel D2 on the left side of the stator core 10. Through such cooling channel distribution, the first cooling holes 11 may be provided on both the left and right sides of the stator core 10 to communicate with the outside.

It can be learned from the stator core 10 provided in the foregoing embodiment that the coolant in the outer-layer cooling channel D1 may be sprayed out through the channel formed through communication between the first cooling holes 11 of the plurality of second silicon steel sheets 1c. A channel formed through communication between the first cooling holes 11 of the plurality of second silicon steel sheets 1c in the first structure T31 may be considered as an oil spray channel, and can implement a function of spraying the coolant out of the stator core 10.

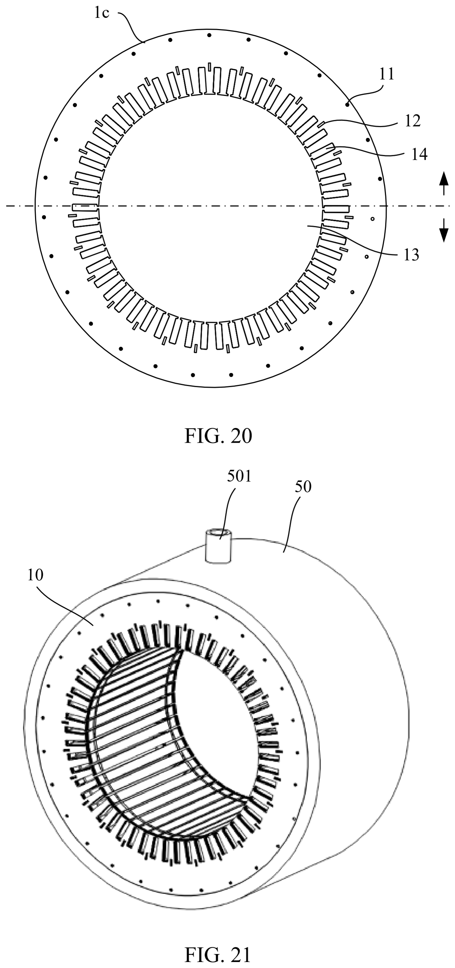

FIG. 20 shows a structure of the plurality of second silicon steel sheets 1c that are adjacently arranged in the manner shown in FIG. 14a. A quantity and placement angles of the second silicon steel sheets 1c are adjusted, so that in a structure above the boundary, first cooling holes 11 at a same angle can sequentially communicate with each other, as shown in FIG. 14c. In this way, the coolant can be sprayed out of the outer-layer cooling channel D1 at the angle. In a structure below the boundary, one of the plurality of first cooling holes 11 at a same angle is blocked, and a structure is similar to that shown in FIG. 14d. Therefore, the outer-layer cooling channel D1 at the angle is blocked. When the stator core 10 is applied, the boundary shown in FIG. 20 may be considered as a center height of the stator core 10 when the stator core 10 is applied. When the coolant is fed into the stator core 10, the coolant may be sprayed outward through the outer-layer cooling channel D1 in the upper half part of the stator core 10, but the coolant cannot be sprayed outward through the outer-layer cooling channel D1 in the lower half part of the stator core 10. When liquid cooling heat dissipation is performed on the stator core 10, the coolant can be centrally sprayed from a specific area at an axial end of the stator core 10, and the coolant in the upper half part of the stator core 10 can flow to the lower half part under gravity to implement liquid cooling heat dissipation, thereby improving cooling effect. Certainly, a position and an angle of the boundary shown in FIG. 20 are merely examples for description. In specific application, the quantity and the arrangement manner of the second silicon steel sheets 1c are adjusted, to implement effect of centralized oil spray at different angles.

Based on the stator core 10, FIG. 21 is a diagram of a fitting structure between the housing 50 and the stator core 10 of the motor 100. The housing 50 includes a coolant interface 501, and coolant may be fed into the cooling channel of the stator core 10 through the coolant interface 501.

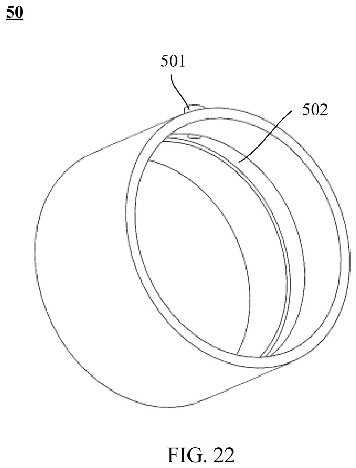

For example, FIG. 22 is a diagram of a structure of the housing 50. The housing 50 is cylindrical, and the coolant interface 501 penetrates an inner wall and an outer wall of the housing 50. The housing 50 further includes a circumferential flow channel 502. The circumferential flow channel 502 is formed by a groove disposed on an inner wall of the housing 50. The circumferential flow channel 502 extends on the inner wall of the housing 50 in a circumferential direction of the housing 50 and communicates with the coolant interface 501.

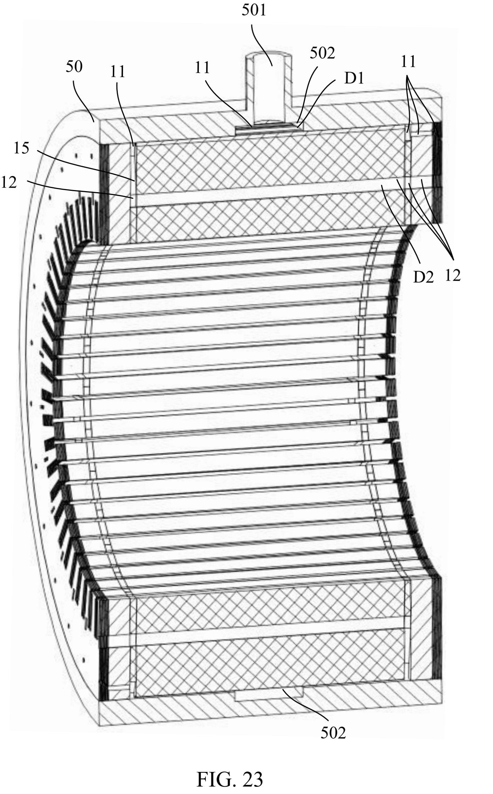

FIG. 23 shows a cross-sectional structure in which the housing 50 fits the stator core 10. As shown in FIG. 23, the housing 50 is coaxially sleeved outside the stator core 10, and a circumferential surface of the stator core 10 is sealed. The circumferential flow channel 502 of the housing 50 communicates with the first cooling hole 11 of the stator core 10, that is, the circumferential flow channel 502 may communicate with the outer-layer cooling channel D1. The coolant may flow into the circumferential flow channel 502 between the housing 50 and the stator core 10 through the coolant interface 501. The circumferential flow channel 502 of the housing 50 extends along an outer circumferential surface of the stator core 10, and the coolant in the circumferential flow channel 502 may flow into each outer-layer cooling channel D1, and flow into the inner-layer cooling channel D2 through the radial flow channel 15 between the first cooling hole 11 and the second cooling hole 12.

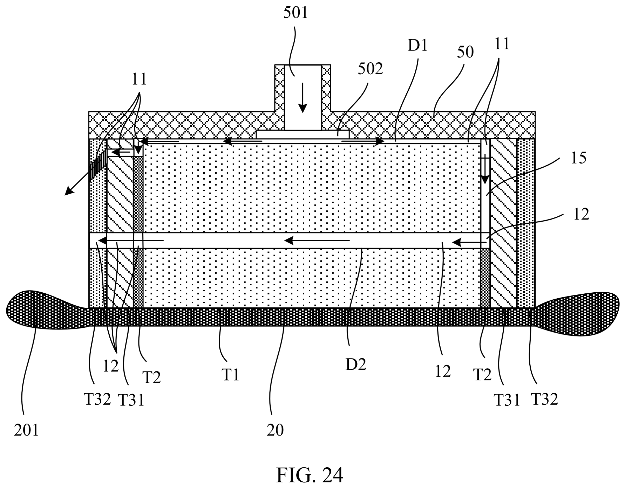

As shown in FIG. 24, one pair of the outer-layer cooling channel D1 and the inner-layer cooling channel D2 is used as an example. The coolant may flow into the circumferential flow channel 502 between the housing 50 and the stator core 10 through the coolant interface 501, and may further flow into the outer-layer cooling channel D1 formed by the first cooling holes 11. The coolant may be sprayed out from the left end of the outer-layer cooling channel D1. The first cooling hole 11 in the external structure T32 on the left side forms a channel oblique to the axial center of the stator core 10, and the coolant is obliquely and centripetally sprayed to an end winding 201 of the stator winding 20 along the channel, to improve heat dissipation effect of the end winding 201. For the entire motor 100, a plurality of groups of outer-layer cooling channels D1 and inner-layer cooling channels D2 are formed in the circumferential direction of the stator core 10, so that centripetal spraying of the coolant to the end winding 201 can be implemented, thereby improving heat dissipation effect of the end winding 201. In the motor 100, a channel formed through communication between the first cooling holes 11 of the plurality of second silicon steel sheets 1c in the first structure T31 may be considered as an oil spray channel, and can implement a function of spraying coolant out of the stator core 10. Therefore, the first structure T31 is a part of the stator core 10. For the entire motor 100, no other end oil spray structure is required to spray the coolant onto the end winding 201. This simplifies a structure and a manufacturing process of the motor 100. In the axial direction of the motor 100, a size of the motor 100 may be smaller. This helps implement a volume of the motor 100. When the motor 100 is applied to the powertrain 1000 and the electric vehicle, smaller space can be occupied, and a larger space gain can be obtained.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A stator silicon steel sheet with a radial flow channel, wherein the stator silicon steel sheet comprises a plurality of first cooling holes, a plurality of second cooling holes, and at least one radial flow channel, wherein
in an axial direction of the stator silicon steel sheet, each first cooling hole and each second cooling hole penetrate the stator silicon steel sheet;
in a circumferential direction of the stator silicon steel sheet, the plurality of first cooling holes are spaced from each other, and the plurality of second cooling holes are spaced from each other;
in a radial direction of the stator silicon steel sheet, a distance between each first cooling hole and a center of the stator silicon steel sheet is greater than a distance between each second cooling hole and the center of the stator silicon steel sheet; and
each radial flow channel is configured to communicate with one first cooling hole and one second cooling hole, and the first cooling hole and the second cooling hole are adjacently arranged in the radial direction of the stator silicon steel sheet.

2. The stator silicon steel sheet according to claim 1, wherein the stator silicon steel sheet comprises a central hole and a plurality of grooves, and the central hole and each groove separately penetrate the stator silicon steel sheet in the axial direction of the stator silicon steel sheet;
in the circumferential direction of the stator silicon steel sheet, the plurality of grooves are spaced from each other and separately communicate with the central hole; and
in the radial direction of the stator silicon steel sheet, the plurality of first cooling holes are respectively arranged adjacent to the plurality of second cooling holes, a groove bottom of the groove faces away from the center of the stator silicon steel sheet, and a distance between the groove bottom of the groove and the center of the stator silicon steel sheet is less than the distance between each second cooling hole and the center of the stator silicon steel sheet.

3. The stator silicon steel sheet according to claim 2, wherein a quantity of the grooves is the same as a quantity of the second cooling holes, each second cooling hole is arranged between two adjacent grooves, and a width of each second cooling hole is less than a width of each groove.

4. The stator silicon steel sheet according to any one of claims 1 to 3, wherein in the axial direction of the stator silicon steel sheet, each radial flow channel penetrates the stator silicon steel sheet and communicates with one first cooling hole and one second cooling hole.

5. The stator silicon steel sheet according to any one of claims 1 to 4, wherein in the circumferential direction of the stator silicon steel sheet, a width of the first cooling hole is greater than the width of the second cooling hole, and a width of a part that is of the radial flow channel and that is close to the second cooling hole is less than a width of a part that is of the radial flow channel and that is close to the second cooling hole.

6. The stator silicon steel sheet according to any one of claims 1 to 5, wherein the quantity of the plurality of second cooling holes is the same as a quantity of the plurality of first cooling holes, and one of any two adjacent second cooling holes communicates with one of any two adjacent second cooling holes through one radial flow channel.

7. The stator silicon steel sheet according to any one of claims 1 to 6, wherein an outer circumferential surface of the stator silicon steel sheet comprises a plurality of notches, each notch penetrates the stator silicon steel sheet in the axial direction of the stator silicon steel sheet, and each notch communicates with one first cooling hole in the radial direction of the stator silicon steel sheet.

8. A stator core, wherein the stator core comprises at least one first silicon steel sheet and at least one stator silicon steel sheet according to any one of claims 1 to 7, the first silicon steel sheet comprises a central hole, a plurality of grooves, a plurality of first cooling holes, and a plurality of second cooling holes, the central hole and each groove separately penetrate the first silicon steel sheet in an axial direction of the first silicon steel sheet, and the plurality of grooves are spaced from each other and separately communicate with the central hole in a circumferential direction of the first silicon steel sheet, wherein
one of the at least one first silicon steel sheet and one of the at least one stator silicon steel sheet are adjacently arranged in an axial direction of the stator core, the central hole of the one first silicon steel sheet communicates with the central hole of the one stator silicon steel sheet, the plurality of grooves of the one first silicon steel sheet respectively communicate with the plurality of grooves of the one stator silicon steel sheet, the plurality of first cooling holes of the one first silicon steel sheet respectively communicate with the plurality of first cooling holes of the one stator silicon steel sheet, and the plurality of second cooling holes of the one first silicon steel sheet respectively communicate with the plurality of second cooling holes of the one stator silicon steel sheet.

9. The stator core according to claim 8, wherein the first silicon steel sheet comprises a plurality of protrusions in a radial direction of the stator core, and each protrusion in the one first silicon steel sheet is fastened to a hole wall of one first cooling hole and extends in a direction away from the central hole, wherein
in a circumferential direction of the stator core, a width of each protrusion is less than a width of each first cooling hole, and the width of each protrusion is less than a width of each first cooling hole of the stator silicon steel sheet.

10. The stator core according to claim 8 or 9, wherein in the axial direction of the stator core, another stator silicon steel sheet of the at least one stator silicon steel sheet is arranged on the other side of the one stator silicon steel sheet, wherein
in the axial direction of the stator core, one radial flow channel of the one stator silicon steel sheet communicates with one radial flow channel of the another stator silicon steel sheet.

11. The stator core according to claim 8, wherein the stator core comprises a plurality of second silicon steel sheets, the second silicon steel sheet comprises a central hole, a plurality of grooves, a plurality of first cooling holes, and a plurality of second cooling holes in the axial direction of the stator core, the central hole and each groove separately penetrate the second silicon steel sheet in an axial direction of the second silicon steel sheet, and the plurality of grooves are spaced from each other and separately communicate with the central hole in a circumferential direction of the second silicon steel sheet, wherein
in the axial direction of the stator core, one of the plurality of second silicon steel sheets and another second silicon steel sheet are adjacently arranged, and the one second silicon steel sheet is arranged between the another second silicon steel sheet and one stator silicon steel sheet, or the one second silicon steel sheet is arranged between the another second silicon steel sheet and one first silicon steel sheet, wherein
a hole diameter of the first cooling hole of the one second silicon steel sheet is less than a hole diameter of the first cooling hole of the stator silicon steel sheet or a hole diameter of the first cooling hole of the first silicon steel sheet.

12. The stator core according to claim 11, wherein in the axial direction of the stator core, one first cooling hole of the one second silicon steel sheet communicates with one first cooling hole of the another second silicon steel sheet;
in a radial direction of the stator core, a distance between the one first cooling hole of the one second silicon steel sheet and the central hole is greater than a distance between the one first cooling hole of the another second silicon steel sheet and the central hole; and
in a circumferential direction of the stator core, distances between the central hole and the plurality of first cooling holes of at least one of the one second silicon steel sheet or the another second silicon steel sheet decrease.

13. The stator core according to claim 11, wherein a quantity of the plurality of first cooling holes of the one second silicon steel sheet is less than a quantity of the plurality of first cooling holes of the stator silicon steel sheet or a quantity of the plurality of first cooling holes of the first silicon steel sheet, wherein
in the axial direction of the stator core, each first cooling hole of the one second silicon steel sheet communicates with one first cooling hole of the stator silicon steel sheet or one first cooling hole of the first silicon steel sheet.

14. The stator core according to claim 11, wherein in a circumferential direction of the stator core, at least one of any two adjacent first cooling holes in the stator silicon steel sheet or at least one of any two adjacent first cooling holes in the first silicon steel sheet communicates with one first cooling hole in the one second silicon steel sheet.

15. A motor, wherein the motor comprises:
a rotor and a stator core, wherein the stator core comprises a plurality of first silicon steel sheets and at least one stator silicon steel sheet according to any one of claims 1 to 7, the plurality of first silicon steel sheets and the at least one stator silicon steel sheet are adjacently arranged in an axial direction of the motor, and the plurality of first silicon steel sheets communicate with a central hole of the at least one stator silicon steel sheet to accommodate the rotor; or
the motor comprises a housing and the stator core according to any one of claims 8 to 14, wherein the housing is sleeved on an outer circumferential surface of the stator core, the housing comprises a coolant interface, and the coolant interface communicates with a first cooling hole of the first silicon steel sheet of the stator core or a first cooling hole of the stator silicon steel sheet of the stator core.

16. A powertrain, comprising a reducer or a transmission and the motor according to claim 15, wherein a motor shaft of the motor is in transmission connection to an input shaft of the reducer or an input shaft of the transmission.

17. An electric vehicle, comprising wheels, a transmission mechanism, and the powertrain according to claim 16, wherein the powertrain drives the wheels via the transmission mechanism.
